(19) Europäisches Patentamt
European Patent Office
Office européen des brevets

(11) EP 4 578 912 A1

(12) **EUROPEAN PATENT APPLICATION**
published in accordance with Art. 153(4) EPC

(43) Date of publication:
**02.07.2025 Bulletin 2025/27**

(21) Application number: **24738481.1**

(22) Date of filing: **03.01.2024**

(51) International Patent Classification (IPC):
***C08L 33/08*** *(2006.01)* ***C09J 133/08*** *(2006.01)*
***C09J 11/04*** *(2006.01)* ***C08F 220/18*** *(2006.01)*
***H01M 50/409*** *(2021.01)* ***H01M 4/62*** *(2006.01)*

(52) Cooperative Patent Classification (CPC):
(C-Sets available)
**C08J 3/12; C08F 220/1812; C08F 220/20; H01M 4/622; H01M 10/0525; H01M 50/414; H01M 50/434; H01M 50/446;** C08K 2201/005; C08K 2201/011; Y02E 60/10 (Cont.)

(86) International application number:
**PCT/CN2024/070306**

(87) International publication number:
**WO 2024/146548 (11.07.2024 Gazette 2024/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.01.2023 CN 202310015629**
**29.11.2023 CN 202311633287**

(71) Applicant: **Contemporary Amperex Technology (Hong Kong) Limited**
**Central (HK)**

(72) Inventors:
- **KANG, Haiyang**
  **Ningde, Fujian 352100 (CN)**
- **ZHENG, Yi**
  **Ningde, Fujian 352100 (CN)**
- **SUN, Chengdong**
  **Ningde, Fujian 352100 (CN)**
- **LI, Lei**
  **Ningde, Fujian 352100 (CN)**
- **HONG, Haiyi**
  **Ningde, Fujian 352100 (CN)**

(74) Representative: **Jacob, Reuben Ellis et al**
**Maucher Jenkins**
**Seventh Floor Offices**
**Artillery House**
**11-19 Artillery Row**
**London SW1P 1RT (GB)**

(54) **POLYMER, PREPARATION METHOD THEREFOR, SEPARATOR, ELECTRODE SHEET, BATTERY AND ELECTRICAL APPARATUS**

(57) Disclosed in the present application are a polymer, a preparation method therefor, a separator, an electrode sheet, a battery and an electrical apparatus. The polymer comprises an organic polymer and an inorganic substance, polymerization monomers of the organic polymer comprising a first monomer and a second monomer. The structural formula of the first monomer comprises:

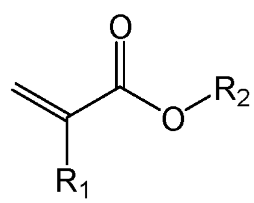

wherein R1 comprises a hydrogen atom or an alkyl group having 1-6 carbon atoms, and R2 comprises a hydrogen atom, a substituted or unsubstituted alkyl group having 1-21 carbon atoms, a cycloalkyl group having 3-6 carbon atoms, and a substituted or unsubstituted isobornyl group, substituent groups of the substituted alkyl group

EP 4 578 912 A1

having 1-21 carbon atoms comprising a hydroxyl group.
The second monomer contains an alkenyl group.

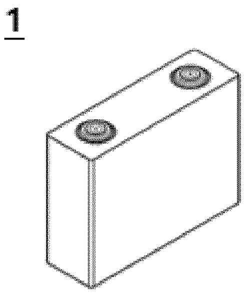

FIG. 1

(52) Cooperative Patent Classification (CPC): (Cont.)

C-Sets
**C08F 220/1812, C08F 220/44, C08F 220/56,**
**C08F 220/20, C08F 220/06;**
**C08F 220/20, C08F 220/1804, C08F 220/14,**
**C08F 220/06, C08F 222/103;**
**C08K 3/36, C08L 33/08**

## Description

## TECHNICAL FIELD

This application relates to the battery field, and in particular, to a polymer and a preparation method thereof, a separator, an electrode plate, a battery, and an electrical device.

## BACKGROUND

In recent years, with the application range of batteries being widened increasingly, batteries have been applied widely in a variety of fields, including energy storage power systems such as hydro, thermal, wind, and solar power stations, and other fields such as electric tools, electric bicycles, electric motorcycles, electric vehicles, military equipment, and aerospace. However, a binder for use in a battery in the prior art incurs the problem of inferior bonding performance and is unable to effectively bond components of the battery, thereby deteriorating the kinetic performance of the battery and causing safety hazards.

## SUMMARY

In view of the technical problems existing in the background technology, this application provides a polymer to increase adhesiveness of a binder in a battery, and in turn, improve the kinetic performance and safety performance of batteries containing the polymer.

To achieve the above objective, an aspect of this application provides a polymer. The polymer includes an organic polymer and an inorganic compound. Polymerization monomers of the organic polymer include a first monomer and a second monomer.

A structural formula of the first monomer includes:

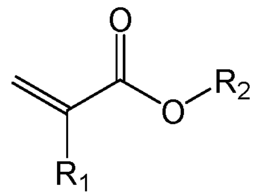

In the formula above, $R_1$ includes a hydrogen atom or a $C_1$ to $C_6$ alkyl group; $R_2$ includes a hydrogen atom, a substituted or unsubstituted $C_1$ to $C_{21}$ alkyl group, a $C_3$ to $C_6$ cycloalkyl group, and a substituted or unsubstituted isobornyl group; and a substituent in the substituted $C_1$ to $C_{21}$ alkyl group includes a hydroxyl group; and the second monomer includes an alkenyl group.

This application achieves at least the following beneficial effects: The polymer of this application includes an organic polymer and an inorganic compound. The resultant polymer is of good bonding properties and exhibits appropriate glass transition temperature, thereby being suitable for fully exerting the bonding properties of the polymer under operating conditions of a battery, and in turn, improving the kinetic performance and safety performance of the battery.

In some embodiments of this application, a mass ratio of the first monomer to the second monomer is 1: (0.05 to 0.5), and optionally 1: (0.1 to 0.2). In this way, the polymer is endowed with good bonding properties and appropriate glass transition temperature.

In some embodiments of this application, the first monomer includes at least one of acrylic acid, methacrylic acid, butenoic acid, heptenoic acid, itaconic acid, maleic acid, methyl acrylate, ethyl acrylate, n-propyl acrylate, n-butyl acrylate, isobutyl acrylate, sec-butyl acrylate, tert-butyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, 2-hydroxypropyl methacrylate, vinyl acetate, trifluoroethyl methacrylate, glycidyl methacrylate, glycidyl acrylate, glycidyl methacrylate, ethylene-acrylate-glycidyl methacrylate, trimethylaminoethyl methacrylate, or trimethylolpropane triacrylate. Optionally, the first monomer includes at least one of methyl methacrylate, lauryl acrylate, lauryl methacrylate, or trimethylolpropane triacrylate. In this way, the polymer in use is of improved toughness and contributes to a good bonding effect.

In some embodiments of this application, a structural formula of the second monomer includes:

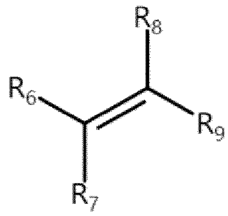

In the formula above, $R_6$, $R_7$, $R_8$, and $R_9$ each independently include a hydrogen atom, a substituted or unsubstituted phenyl group, a substituted or unsubstituted cycloalkyl group, or a linear or branched alkyl group. In this way, the adhesiveness and electrolyte solution resistance of the polymer are improved, thereby improving the kinetic performance and safety performance of the battery.

In some embodiments of this application, the second monomer includes at least one of ethylene, styrene, butadiene, or isoprene. In this way, the adhesiveness and electrolyte solution resistance of the polymer are improved, thereby improving the kinetic performance and safety performance of the battery.

In some embodiments of this application, the polymerized monomers of the organic polymer include the first monomer, the second monomer, and a third monomer. The third monomer includes an unsaturated cyano group. In this way, with the third monomer containing an unsaturated cyano group, the polymer is made to contain a highly polar cyano group, thereby improving the ionic conductivity of the polymer, and in turn, improving the kinetic performance of the battery.

In some embodiments of this application, a structural formula of the third monomer is:

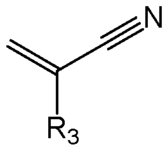

In the formula above, $R_3$ includes a hydrogen atom or a $C_1$ to $C_6$ alkyl group. In this way, the polymer is made to contain a highly polar cyano group, thereby improving the ionic conductivity of the polymer, and in turn, improving the kinetic performance of the battery.

In some embodiments of this application, the third monomer includes at least one of acrylonitrile, methacrylonitrile, or ethacrylonitrile, and optionally is at least one of acrylonitrile or methacrylonitrile. This improves the ionic conductivity of the polymer, and in turn, improves the kinetic performance of the battery.

In some embodiments of this application, a mass ratio between the first monomer, the second monomer, and the third monomer is 1: (0.05 to 0.5): (0.01 to 0.8), and optionally 1: (0.1 to 0.2): (0.05 to 0.6). In this way, the resultant polymer is endowed with good bonding properties and appropriate glass transition temperature, thereby being suitable for fully exerting the bonding properties of the polymer under operating conditions of the battery, and in turn, improving the kinetic performance and safety performance of the secondary battery. In addition, when applied to a separator, the polymer reduces the resistance of the separator and increases the ion conductivity of the separator, thereby improving the battery performance.

In some embodiments of this application, the polymerization monomers of the organic polymer include the first monomer, the second monomer, the third monomer, and a fourth monomer. The fourth monomer includes an unsaturated amide group. In this way, the fourth monomer can adjust the molecular weight of the organic polymer and improve the adhesiveness of the organic polymer.

In some embodiments of this application, a structural formula of the fourth monomer includes:

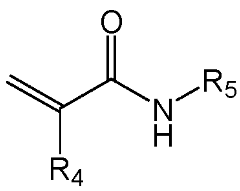

In the formula above, $R_4$ includes a hydrogen atom or a $C_1$ to $C_6$ alkyl group; and $R_5$ includes a hydrogen atom, a hydroxy-substituted $C_1$ to $C_6$ alkyl group, or a $C_1$ to $C_6$ alkoxy group. In this way, the electrolyte solution resistance of the polymer is improved.

In some embodiments of this application, the fourth monomer includes at least one of acrylamide, N-methylol acrylamide, or N-butoxymethacrylamide, and optionally is at least one of acrylamide or N-methylol acrylamide. In this way,

the electrolyte solution resistance of the polymer is improved.

In some embodiments of this application, a mass ratio between the first monomer, the second monomer, the third monomer, and the fourth monomer is 1: (0.05 to 0.5): (0.01 to 0.8): (0.05 to 0.7), and optionally 1: (0.1 to 0.2): (0.05 to 0.6): (0.1 to 0.5). In this way, the resistance of the separator containing the polymer is lower, the ion conductivity of the separator is increased, and the battery performance is improved.

In some embodiments of this application, a particle diameter of the inorganic compound is 0.0001 μm to 2 μm, optionally the particle diameter of the inorganic compound is 0.01 μm to 0.5 μm, and still optionally the particle diameter of the inorganic compound is 0.01 μm to 0.2 μm. In this way, the inorganic compound and the organic polymer can be mixed well, thereby improving the ionic conductivity and electrolyte solution resistance of the separator containing the polymer.

In some embodiments of this application, the inorganic compound is attached to a surface of the organic polymer and/or dispersed inside the organic polymer. In this way, with the organic polymer as a skeleton, the inorganic compound may be dispersed inside the organic polymer and on the surface of the organic polymer at the same time, or may be distributed only inside the organic polymer, or may be distributed only on the surface of the organic polymer, so that the polymer is suitable for fully exerting the bonding properties of the polymer under operating conditions of the battery, thereby improving the kinetic performance and safety performance of the battery.

In some embodiments of this application, the inorganic compound includes at least one of a silicon oxide, an aluminum oxide, a calcium oxide, a zinc oxide, a magnesium oxide, sodium sulfate, sodium benzoate, calcium carbonate, or a modified material thereof, optionally the inorganic compound includes at least one of silicon dioxide, aluminum oxide, zinc oxide, magnesium oxide, or sodium benzoate. Still optionally, the inorganic compound includes at least one of fumed silica, silicon micropowder, aluminum oxide, or sodium benzoate. This improves the ionic conductivity and electrolyte solution resistance of the separator containing the polymer.

In some embodiments of this application, the inorganic compound includes silicon dioxide. A particle diameter of the silicon dioxide is 2 nm to 1 μm, optionally 5 nm to 100 nm, and still optionally 5 nm to 20 nm. In this way, pores are prevented from being blocked, and the ionic conductivity and electrolyte solution resistance of the separator containing the polymer are improved.

In some embodiments of this application, based on a mass of the polymer, a mass percent of the organic polymer is 50% to 99.9%, optionally 60% to 99%, and still optionally 70% to 99%. In this way, the polymer is endowed with good bonding properties, thereby improving the kinetic performance and safety performance of the battery.

In some embodiments of this application, a particle diameter of the polymer satisfies: 3 μm $\leq D_{50} \leq$ 10 μm. In this way, when applied to a separator, the polymer can increase the energy density of a battery cell, and reduce the probability of pore blockage in the separator.

In some embodiments of this application, a particle size distribution span of the polymer, defined as $(D_{90}-D_{10})/D_{50}$, is less than or equal to 2.5, optionally the span of the polymer is less than 2, and still optionally, the span of the polymer is less than 1.8. In this way, when applied to a separator, the polymer can reduce the probability of pore blockage.

In some embodiments of this application, an outer surface of the polymer is uneven. This can increase the contact area between the polymer and the separator and other components, thereby improving the bonding effect.

In some embodiments of this application, the polymer exhibits at least a first glass transition temperature and a second glass transition temperature within a range of -10 °C to 95 °C. The first glass transition temperature is greater than the second glass transition temperature. In this way, the polymer of this application can fully exert the bonding properties of the polymer under operating conditions of the battery, thereby improving the kinetic performance and safety performance of the battery.

In some embodiments of this application, the first glass transition temperature of the polymer is 30 °C to 75 °C; and/or, the second glass transition temperature of the polymer is -10 °C to 25 °C. In this way, the polymer of this application can fully exert the bonding properties of the polymer under operating conditions of the battery, thereby improving the kinetic performance and safety performance of the battery.

A second aspect of this application provides a method for preparing a polymer. The method includes: mixing an organic polymer and an inorganic compound, where polymerization monomers of the organic polymer include a first monomer and a second monomer, and a structural formula of the first monomer includes:

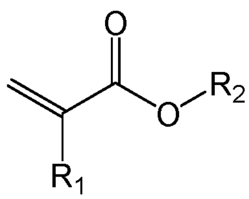

In the formula above, $R_1$ includes a hydrogen atom or a $C_1$ to $C_6$ alkyl group; $R_2$ includes a hydrogen atom, a

substituted or unsubstituted $C_1$ to $C_{21}$ alkyl group, a $C_3$ to $C_6$ cycloalkyl group, and a substituted or unsubstituted isobornyl group; and a substituent in the substituted $C_1$ to $C_{21}$ alkyl group includes a hydroxyl group; and the second monomer includes an alkenyl group.

In this way, a polymer of good bonding properties is prepared by the method hereof. The polymer exhibits appropriate glass transition temperature, thereby being suitable for fully exerting the bonding properties of the polymer under operating conditions of a battery, and in turn, improving the kinetic performance and safety performance of the battery.

A third aspect of this application provides a separator. The separator includes the above polymer or a polymer prepared by the above method, thereby improving the stability, ion conductivity, electrolyte solution resistance, and other performance metrics of the separator, and in turn, improving the kinetic performance and safety performance of the battery.

In some embodiments of this application, an ionic conductivity of the separator is 0.3 $mS \cdot cm^{-1}$ to 0.6 $mS \cdot cm^{-1}$, and optionally 0.4 $mS \cdot cm^{-1}$ to 0.5 $mS \cdot cm^{-1}$. In this way, the kinetic performance of the secondary battery is improved.

A fourth aspect of this application provides an electrode plate. The electrode plate includes the above polymer or a polymer prepared by the above method, thereby improving the ion conductivity and structural stability of the electrode plate, and improving the kinetic performance and safety performance of the battery.

A fifth aspect of this application provides a battery. The battery includes the separator and/or the electrode plate. Therefore, the battery exhibits excellent kinetic performance and safety performance.

A sixth aspect of this application provides an electrical device. The electrical device includes the battery. Therefore, the electrical device exhibits excellent kinetic performance and safety performance.

Additional aspects and advantages of this application will be partly given in the following description, and a part thereof will become evident in the following description or will be learned in the practice of this application.

## BRIEF DESCRIPTION OF DRAWINGS

By reading the following detailed description of exemplary embodiments, a person of ordinary skill in the art becomes clearly aware of various other advantages and benefits. The drawings are merely intended to illustrate the exemplary embodiments, but not to limit this application. In all the drawings, the same reference numeral represents the same component. In the drawings:

FIG. 1 is a schematic diagram of a battery according to an embodiment of this application;
FIG. 2 is an exploded view of the battery shown in FIG. 1 according to an embodiment of this application.
FIG. 3 is a schematic diagram of a battery module according to an embodiment of this application;
FIG. 4 is a schematic diagram of a battery pack according to an embodiment of this application;
FIG. 5 is an exploded view of a battery pack shown in FIG. 4 according to an embodiment of this application; and
FIG. 6 is a schematic diagram of an electrical device that uses a battery as a power supply according to an embodiment of this application.

List of reference numerals:

1 battery cell; 11 housing; 12 electrode assembly; 13 cover plate; 2 battery module; 3 battery pack; 31 upper box; 32 lower box.

## DETAILED DESCRIPTION OF EMBODIMENTS

The following describes some embodiments of the technical solutions of this application in detail. The following embodiments are merely intended as examples to describe the technical solutions of this application more clearly, but not intended to limit the protection scope of this application.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In

addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, any embodiments and optional embodiments hereof may be combined with each other to form a new technical solution.

Unless otherwise expressly specified herein, any technical features and optional technical features hereof may be combined with each other to form a new technical solution.

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, "include" and "comprise" mentioned herein mean open-ended inclusion, or closed-ended inclusion. For example, the terms "include" and "comprise" may mean inclusion of other items that are not recited, or inclusion of only the items recited.

Unless otherwise expressly specified, the term "or" used herein is inclusive. For example, the expression "A or B" means "A alone, B alone, or both A and B". More specifically, all and any of the following conditions satisfy the condition "A or B": A is true (or existent) and B is false (or absent); A is false (or absent) and B is true (or existent); and, both A and B are true (or existent).

A secondary battery includes a positive electrode plate, a negative electrode plate, a separator, and an electrolyte solution. To facilitate the manufacturing process and optimize battery cell performance, a magnitude of adhesion needs to be imparted between the positive electrode plate, the negative electrode plate, and the separator by coating a surface of the separator with a sticky coating material to make a sticky separator. Under current technology, the materials applied to the surface of the separator are classed into fluoropolymers and non-fluorinated polymers.

A fluoropolymer-coated separator involves a fluoropolymer. The raw material source of the fluoropolymer binder is scarce, and the relevant resources are gradually depleted. The fluoropolymer is increasingly costly, and is manufactured by a process that involves an ozone-depleting substance. In addition, the fluoropolymer to be applied to the separator melts at a high melting point. The hot-pressing temperature of a battery cell is typically 100 °C or below, being lower than the melting point of a fluoropolymer binder. Therefore, the separator that employs a fluoropolymer binder is of low adhesion to an electrode plate during hot-pressing. At the same time, the fluoropolymer binder material is of a high density, and the required coating weight is high. A separator coated with a non-fluorinated polymer typically employs a polyester polymer. However, existing polyester polymers are hardly adaptable to a battery cell manufacturing process. For example, a small-grained emulsion or suspension incurs the problem of pore blockage. A large-grained polyester powder with a high glass transition temperature incurs the problems of a poor hot-pressing effect and an increase in the internal resistance of the battery.

In other words, some of the binders for use in a battery in the prior art are of inferior bonding properties, and some melt at a relatively high melting point. The bonding effect of such binders can hardly come into full play under operating conditions of the battery, and can hardly bond a battery component effectively, thereby causing the component to detach or fall off during use, and in turn, deteriorating the kinetic performance of the battery and causing safety hazards.

The polymer of this application includes an organic polymer and an inorganic compound. The organic polymer is polymerized from a first monomer containing

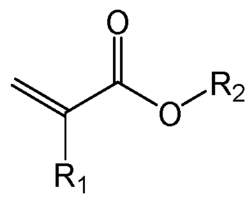

and a second monomer containing an alkenyl group. The organic polymer works together the inorganic compound to endow the polymer with good bonding properties and appropriate glass transition temperature, thereby being suitable for fully exerting the bonding properties under operating conditions of the battery. In addition, the organic polymer works together with the inorganic compound to improve the ion conductivity and electrolyte solution resistance of the polymer,

thereby improving the kinetic performance and safety performance of the battery containing the polymer.

The polymer disclosed herein is applicable to a battery. The battery disclosed herein is applicable to an electrical device that uses a battery as a power supply and is applicable to various energy storage systems that use a battery as an energy storage unit. The electrical devices may include, but are not limited to, a mobile phone, a tablet, a notebook computer, an electric toy, an electric tool, an electric power cart, an electric vehicle, a ship, a spacecraft, or the like. The electric toy may include stationary or mobile electric toys, such as game console, electric car toy, electric ship toy, electric airplane toy, and the like. The spacecraft may include airplane, rocket, space shuttle, spaceship, and the like.

An aspect of this application discloses a polymer. The polymer includes an organic polymer and an inorganic compound. Polymerization monomers of the organic polymer include a first monomer and a second monomer.

A structural formula of the first monomer includes:

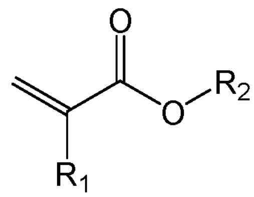

In the formula above, $R_1$ includes a hydrogen atom or a $C_1$ to $C_6$ alkyl group; $R_2$ includes a hydrogen atom, a substituted or unsubstituted $C_1$ to $C_{21}$ alkyl group, a $C_3$ to $C_6$ cycloalkyl group, and a substituted or unsubstituted isobornyl group; and a substituent in the substituted $C_1$ to $C_{21}$ alkyl group includes a hydroxyl group; and the second monomer includes an alkenyl group.

The polymer of this application includes an organic polymer and an inorganic compound. The organic polymer is polymerized from a first monomer containing

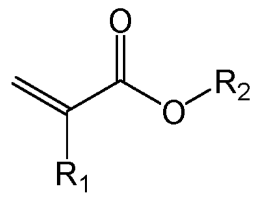

and a second monomer containing an alkenyl group. The unsaturated ester group in the first monomer can improve the swelling resistance of the polymer. As a flexible monomer segment in the molecular chain, the unsaturated ester group can adjust the glass transition temperature of the organic polymer, improve the toughness of the polymer in use, and contribute to a good bonding effect. The second monomer contains an alkenyl group, and polymerizes with the first monomer to achieve good bonding properties of the organic polymer. In this way, in this application, the organic polymer polymerized from the first monomer and the second monomer works together with the inorganic compound to endow the polymer with good bonding properties and appropriate glass transition temperature, thereby being suitable for fully exerting the bonding properties under operating conditions of the battery. In addition, the organic polymer works together with the inorganic compound to improve the ion conductivity and electrolyte solution resistance of the polymer, thereby improving the kinetic performance and safety performance of the battery containing the polymer.

In some embodiments of this application, a structural formula of the first monomer includes:

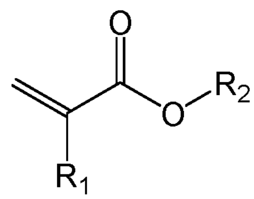

In the formula above, $R_1$ includes a hydrogen atom or a $C_1$ to $C_6$ alkyl group; $R_2$ includes a hydrogen atom, a substituted or unsubstituted $C_1$ to $C_{21}$ alkyl group, a $C_3$ to $C_6$ cycloalkyl group, and a substituted or unsubstituted isobornyl group; and a substituent in the substituted $C_1$ to $C_{21}$ alkyl group includes a hydroxyl group. In this way, the unsaturated ester group in the first monomer can improve the swelling resistance of the polymer. As a flexible monomer segment in the molecular chain, the unsaturated ester group can adjust the glass transition temperature of the organic polymer, improve the toughness of the polymer in use, and contribute to a good bonding effect.

As an example, the $C_1$ to $C_6$ alkyl group may be understood as an alkyl group containing 1 to 6 carbon atoms, for example, methyl ($-CH_3$), ethyl ($-CH_2CH_3$), n-propyl ($-CH_2CH_2CH_3$), isopropyl ($-CH(CH_3)_2$), n-butyl ($-CH_2CH_2CH_2CH_3$), tert-butyl ($-C(CH_3)_3$), n-pentyl ($-CH_2CH_2CH_2CH_2CH_3$), n-hexyl ($-CH_2CH_2CH_2CH_2CH_2CH_3$), and the like.

As an example, among the substituted or unsubstituted $C_1$ to $C_{21}$ alkyl groups, the substituted $C_1$ to $C_{21}$ alkyl group may be understood as an alkyl group containing 1 to 21 carbon atoms with at least one hydrogen atom substituted by another group, for example, $-CH_2OH$, $-CH_2CH_2OH$, $-CH_2CH_2CH_2OH$, $-CH(CH_2OH)_2$, - $CH_2CH_2CH_2CH_2OH$, $-C(CH2OH)_3$, $-CH_2CH_2CH_2CH_2CH_2OH$, and the like; and the unsubstituted $C_1$ to $C_{21}$ alkyl group may be understood as an alkyl group containing 1 to 21 carbon atoms, for example, methyl ($-CH_3$), ethyl ($-CH_2CH_3$), n-propyl ($-CH_2CH_2CH_3$), isopropyl ($-CH(CH_3)_2$), n-butyl ($-CH_2CH_2CH_2CH_3$), tert-butyl ($-C(CH_3)_3$), n-pentyl ($-CH_2CH_2CH_2CH_2CH_3$), n-hexyl ($-CH_2CH_2CH_2CH_2CH_2CH_3$), and the like. The $C_3$ to $C_6$ cycloalkyl group may be understood as a cycloalkyl group containing 3 to 6 carbon atoms, for example, cyclopropyl, cyclobutyl, cyclopentyl, cyclohexyl, and the like.

In some embodiments of this application, the first monomer includes at least one of acrylic acid, methacrylic acid, butenoic acid, heptenoic acid, itaconic acid, maleic acid, methyl acrylate, ethyl acrylate, n-propyl acrylate, n-butyl acrylate, isobutyl acrylate, sec-butyl acrylate, tert-butyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, 2-hydroxypropyl methacrylate, vinyl acetate, trifluoroethyl methacrylate, glycidyl methacrylate, glycidyl acrylate, glycidyl methacrylate, ethylene-acrylate-glycidyl methacrylate, trimethylaminoethyl methacrylate, or trimethylolpropane triacrylate. In this way, at least one of the above organic compounds used as the first monomer can adjust the glass transition temperature of the organic polymer, improve the toughness of the polymer in use, and contribute to a good bonding effect. In some other embodiments of this application, the first monomer includes at least one of methyl methacrylate, lauryl acrylate, lauryl methacrylate, or trimethylolpropane triacrylate, thereby further adjusting the glass transition temperature of the organic polymer, improving the toughness of the polymer in use, and contributing to a good bonding effect.

In some embodiments of this application, the second monomer contains an alkenyl group. With the second monomer containing an alkenyl group, the second monomer polymerizes with the first monomer to form an organic polymer endowed with good bonding properties and a relatively low glass transition temperature.

In some embodiments of this application, a structural formula of the second monomer includes:

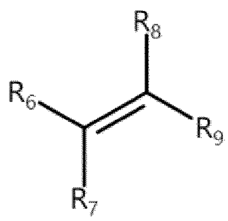

In the formula above, $R_6$, $R_7$, $R_8$, and $R_9$ each independently include a hydrogen atom, a substituted or unsubstituted phenyl group, a substituted or unsubstituted cycloalkyl group, or a linear or branched alkyl group.

It is hereby noted that the substituted phenyl group may be understood as a phenyl group in which at least one hydrogen atom is substituted by another group, for example, benzyl, phenethyl, or the like; and the substituted cycloalkyl group may be understood as a cycloalkyl group in which at least one hydrogen atom is substituted by another group, for example, cyclopropylmethyl, cyclobutylmethyl, or the like.

In this way, with the second monomer of the above composition added, the polymer containing the second monomer is endowed with good bonding properties and appropriate glass transition temperature, thereby being suitable for fully exerting the bonding properties of the polymer under operating conditions of the battery, and in turn, improving the kinetic performance and safety performance of the secondary battery. In addition, when applied to a separator, the polymer reduces the resistance of the separator and increases the ion conductivity of the separator, thereby improving the battery performance.

In some embodiments of this application, the second monomer includes at least one of ethylene, styrene, butadiene, or isoprene. Therefore, the second monomer being at least one of the above organic compounds can further play a role in regulating the molecular weight, improve the bonding properties of the organic polymer, and endow the organic polymer with appropriate glass transition temperature.

In some embodiments of this application, a mass ratio of the first monomer to the second monomer is 1: (0.05 to 0.5), for example, 1: (0.1 to 0.45), 1: (0.15 to 0.4), 1: (0.2 to 0.35), 1: (0.25 to 0.3), or the like. In this way, the organic polymer is prepared from the first monomer and the second monomer mixed at the above ratio, and the resultant polymer is endowed with good bonding properties and appropriate glass transition temperature, thereby being suitable for fully exerting the bonding properties of the polymer under operating conditions of the battery, and in turn, improving the kinetic performance and safety performance of the secondary battery. In addition, when applied to a separator, the polymer

reduces the resistance of the separator and increases the ion conductivity of the separator, thereby improving the battery performance. In some other embodiments of this application, the mass ratio of the first monomer to the second monomer is 1: (0.1 to 0.2).

In some embodiments of this application, the polymerized monomers of the organic polymer include the first monomer, the second monomer, and a third monomer. The third monomer includes an unsaturated cyano group. In this way, a highly polar cyano group is introduced into the polymer, thereby improving the ionic conductivity of the polymer, and in turn, improving the kinetic performance of the battery.

In some embodiments of this application, a structural formula of the third monomer is:

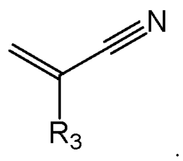

In the formula above, $R_3$ includes a hydrogen atom or a $C_1$ to $C_6$ alkyl group. In this way, a highly polar cyano group is introduced into the polymer, thereby improving the ionic conductivity of the polymer, and in turn, improving the kinetic performance of the battery.

In some embodiments of this application, the third monomer includes at least one of acrylonitrile, methacrylonitrile, or ethacrylonitrile. In some other embodiments of this application, the third monomer includes at least one of acrylonitrile or methacrylonitrile. This improves the ionic conductivity of the polymer, and in turn, improves the kinetic performance of the battery.

In some embodiments of this application, a mass ratio between the first monomer, the second monomer, and the third monomer is 1: (0.05 to 0.5): (0.01 to 0.8), for example, 1: (0.1 to 0.45): (0.01 to 0.8), 1: (0.15 to 0.4): (0.01 to 0.8), 1: (0.2 to 0.35): (0.01 to 0.8), 1: (0.25 to 0.3): (0.01 to 0.8), 1: (0.05 to 0.5): (0.05 to 0.75), 1: (0.05 to 0.5): (0.1 to 0.7), 1: (0.05 to 0.5): (0.15 to 0.65), 1: (0.05 to 0.5): (0.2 to 0.6), 1: (0.05 to 0.5): (0.3 to 0.5), 1: (0.05 to 0.5): (0.4 to 0.5), or the like. In this way, the organic polymer is prepared from the first monomer, the second monomer, and the third monomer mixed at the above ratio, and the resultant polymer is endowed with good bonding properties and ionic conductivity, thereby being suitable for fully exerting the bonding properties of the polymer under operating conditions of the battery, and in turn, improving the kinetic performance and safety performance of the secondary battery. In some other embodiments of this application, the mass ratio between the first monomer, the second monomer, and the third monomer is 1: (0.1 to 0.2): (0.05 to 0.6). In this way, the resultant polymer is endowed with good bonding properties and ionic conductivity, thereby being suitable for fully exerting the bonding properties of the polymer under operating conditions of the battery, and in turn, improving the kinetic performance and safety performance of the secondary battery.

In some embodiments of this application, the polymerization monomers of the organic polymer include the first monomer, the second monomer, the third monomer, and a fourth monomer. The fourth monomer includes an unsaturated amide group. In this way, the fourth monomer can adjust the molecular weight of the organic polymer and improve the adhesiveness of the organic polymer.

In some embodiments of this application, a structural formula of the fourth monomer includes:

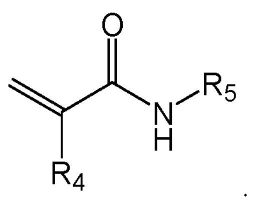

In the formula above, $R_4$ includes a hydrogen atom or a $C_1$ to $C_6$ alkyl group; and $R_5$ includes a hydrogen atom, a hydroxy-substituted $C_1$ to $C_6$ alkyl group, or a $C_1$ to $C_6$ alkoxy group. In this way, the fourth monomer contains an unsaturated amide group, and can adjust the molecular weight of the organic polymer and improve the adhesiveness of the polymer.

In some embodiments of this application, the fourth monomer includes at least one of acrylamide, N-methylol acrylamide, or N-butoxymethacrylamide. In this way, by using at least one of the fourth monomers disclosed herein, this application can adjust the molecular weight of the organic polymer and improve the adhesiveness of the polymer. In some embodiments of this application, the fourth monomer includes at least one of acrylamide or N-methylol acrylamide.

In some embodiments of this application, the mass ratio between the first monomer, the second monomer, the third monomer, and the fourth monomer is 1: (0.05 to 0.5): (0.01 to 0.8): (0.05 to 0.7), for example, 1: (0.1 to 0.45): (0.01 to 0.8): (0.05 to 0.7), 1: (0.15 to 0.4): (0.01 to 0.8): (0.05 to 0.7), 1: (0.2 to 0.35): (0.01 to 0.8): (0.05 to 0.7), 1: (0.25 to 0.3): (0.01

to 0.8): (0.05 to 0.7), 1: (0.05 to 0.5): (0.05 to 0.75): (0.05 to 0.7), 1: (0.05 to 0.5): (0.1 to 0.7): (0.05 to 0.7), 1: (0.05 to 0.5): (0.15 to 0.65): (0.05 to 0.7), 1: (0.05 to 0.5): (0.2 to 0.6): (0.05 to 0.7), 1: (0.05 to 0.5): (0.3 to 0.5): (0.05 to 0.7), 1: (0.05 to 0.5): (0.4 to 0.5): (0.05 to 0.7), 1: (0.05 to 0.5): (0.01 to 0.8): (0.1 to 0.7), 1: (0.05 to 0.5): (0.01 to 0.8): (0.2 to 0.6), 1: (0.05 to 0.5): (0.01 to 0.8): (0.3 to 0.5), 1: (0.05 to 0.5): (0.01 to 0.8): (0.4 to 0.5), or the like. In this way, with the first monomer, the second monomer, the third monomer, and the fourth monomer mixed at the above ratio, the organic polymer containing the monomers is endowed with good bonding properties and appropriate glass transition temperature, thereby being suitable for fully exerting the bonding properties of the polymer under operating conditions of the battery, and in turn, improving the kinetic performance and safety performance of the secondary battery. In addition, when applied to a separator, the polymer reduces the resistance of the separator and increases the ion conductivity of the separator, thereby improving the battery performance. In some other embodiments of this application, the mass ratio between the first monomer, the second monomer, the third monomer, and the fourth monomer is 1: (0.1 to 0.2): (0.05 to 0.6): (0.1 to 0.5).

In some embodiments of this application, a weight-average molecular weight of the organic polymer is 500,000 to 1,200,000, for example, 550,000 to 1,150,000, 600,000 to 1,100,000, 650,000 to 1,050,000, 700,000 to 1,000,000, 750,000 to 950,000, 800,000 to 900,000, 850,000 to 900,000, or the like. In this way, the organic polymer with the weight-average molecular weight falling within the above range is endowed with excellent bonding properties, thereby being suitable for fully exerting the bonding properties of the polymer under operating conditions of the battery, and in turn, improving the kinetic performance and safety performance of the secondary battery. In some other embodiments of this application, the weight-average molecular weight of the organic polymer is 800,000 to 1,000,000.

It is hereby noted that the weight-average molecular weight of the organic polymer may be measured by a method commonly used in this field, for example, measured by gel permeation chromatography with reference to the standard GB/T 21863-2008.

In some embodiments of this application, a particle diameter of the inorganic material is 0.0001 μm to 2 μm, for example, 0.0005 μm to 2 μm, 0.001 μm to 2 μm, 0.005 μm to 2 μm, 0.01 μm to 2 μm, 0.05 μm to 2 μm, 0.08 μm to 2 μm, 0.1 μm to 2 μm, 0.2 μm to 1.8 μm, 0.5 μm to 1.5 μm, 0.7 μm to 1.2 μm, 1 μm to 1.2 μm, or the like. In this way, with the inorganic compound of the above particle diameter, the inorganic compound and the organic polymer can be mixed well, thereby improving the ionic conductivity and electrolyte solution resistance of the separator containing the polymer. In some other embodiments of this application, the particle diameter of the inorganic compound is 0.01 μm to 0.5 μm. Further, the particle diameter of the inorganic compound is 0.01 μm to 0.2 μm.

In some embodiments of this application, the inorganic compound is attached to a surface of the organic polymer and/or dispersed inside the organic polymer. In this way, with the organic polymer as a skeleton, the inorganic compound may be dispersed inside the organic polymer and on the surface of the organic polymer at the same time, or may be distributed only inside the organic polymer, or may be distributed only on the surface of the organic polymer, so that the polymer is suitable for fully exerting the bonding properties of the polymer under operating conditions of the battery, thereby improving the kinetic performance and safety performance of the battery.

In some embodiments of this application, the inorganic compound includes at least one of a silicon oxide, an aluminum oxide, a calcium oxide, a zinc oxide, a magnesium oxide, sodium sulfate, sodium benzoate, calcium carbonate, or a modified material thereof. In this way, at least one of the above inorganic compounds is complexed with the organic polymer to obtain a polymer that is endowed with good bonding properties, thereby improving the kinetic performance and safety performance of the battery. In some embodiments of this application, the inorganic compound includes at least one of silicon dioxide, aluminum oxide, zinc oxide, magnesium oxide, or sodium benzoate. Further, the inorganic compound includes at least one of fumed silica, silicon micropowder, aluminum oxide, or sodium benzoate.

In some embodiments of this application, the inorganic compound includes silicon dioxide. The particle diameter of the silicon dioxide is 2 nm to 1 μm, for example, 10 nm to 1 μm, 20 nm to 1 μm, 50 nm to 1 μm, 100 nm to 1 μm, 200 nm to 1 μm, 300 nm to 1 μm, 400 nm to 1 μm, 500 nm to 1 μm, 600 nm to 1 μm, 700 nm to 1 μm, 800 nm to 1 μm, 900 nm to 1 μm, or the like. Therefore, the silicon dioxide with a particle diameter falling within the above range is used as an inorganic compound, and the inorganic compound is complexed with the above organic polymer to obtain a polymer for use in a separator, thereby preventing pores from being blocked, and improving the ionic conductivity and electrolyte solution resistance of the separator that contains the polymer. In some other embodiments of this application, the particle diameter of the silicon dioxide is 5 nm to 100 μm. Further, the particle diameter of the silicon dioxide is 5 nm to 20 nm.

In some embodiments of this application, based on a mass of the polymer, a mass percent of the organic polymer is 50% to 99.9%, for example, 55% to 99%, 60% to 95%, 65% to 90%, 70% to 85%, 75% to 80%, or the like. In this way, the polymer is endowed with good bonding properties, thereby improving the kinetic performance and safety performance of the battery. In some other embodiments of this application, based on the mass of the polymer, the mass percent of the organic polymer is 60% to 99%. Further, based on the mass of the polymer, the mass percent of the organic polymer is 70% to 99%.

In some embodiments of this application, a particle diameter of the polymer satisfies: 3 μm $\leq D_{50} \leq$ 10 μm, for example, 4 μm $\leq D_{50} \leq$ 9 μm, 5 μm $\leq D_{50} \leq$ 8 μm, 6 μm $\leq D_{50} \leq$ 7 μm, or the like. In this way, when applied to a separator, the polymer of such a particle diameter can increase the energy density of the battery cell, and reduce the probability of pore

blockage in the separator.

It is hereby noted that in an embodiment of this application, $D_{50}$ of the polymer is a volume median diameter corresponding to a point at which the cumulative volume percent reaches 50% in a volume-based particle size distribution curve of the sample particles, and is tested by the following method:

Testing the volume median diameter with reference to the standard GB/T 19077-2016/ISO 13320: 2009 *Particles Size Analysis Laser Diffraction Methods* by using a laser particle size analyzer (Malvern 3000, MasterSizer 3000) as a test instrument and using a helium-neon red light source as a main light source. Picking a clean small beaker, adding 1 gram of the specimen into the beaker, adding a drop of surfactant, and adding 20 ml of deionized water (the specimen concentration ensures that the shading degree is 8% to 12%). Sonicating the solution at 53 KHz/120 W for 5 minutes to ensure that the specimen is completely dispersed. Turning on the laser particle size analyzer, cleaning the optical path system, and automatically testing the background. Stirring the sonicated solution under test to disperse the specimen evenly, and putting the specimen into a sample cell as required to start measuring the particle diameter. The measurement results can be read from the instrument.

In some embodiments of this application, a particle size distribution span of the polymer, defined as $(D_{90}-D_{10})/D_{50}$, is less than or equal to 2.5. In this way, the particle size distribution of the polymer is relatively uniform. When applied to a separator, the polymer can reduce the probability of pore blockage. In some other embodiments of this application, the particle size distribution span of the polymer is less than 2. Further, the particle size distribution span of the polymer is less than 1.8.

It is hereby noted that, $D_{50}$ is tested by the above method. In an embodiment of this application, $D_{90}$ is a particle diameter corresponding to a point at which the cumulative volume percent reaches 90% in the volume-based particle size distribution curve of the sample particles, and $D_{10}$ is a particle diameter corresponding to a point at which the cumulative volume percent reaches 10% in the volume-based particle size distribution curve of the sample particles, both being tested in the same way as the $D_{50}$.

In some embodiments of this application, an outer surface of the polymer is uneven. This can increase the contact area between the polymer and the separator and other components, thereby improving the bonding effect.

In some embodiments of this application, the polymer exhibits at least a first glass transition temperature and a second glass transition temperature within a range of -10 °C to 95 °C. The first glass transition temperature is greater than the second glass transition temperature.

The glass transition temperature is attributable to a combination of the organic polymer and the inorganic compound. The resultant polymer is endowed with good bonding properties and appropriate glass transition temperature, thereby being suitable for fully exerting the bonding properties of the polymer under operating conditions of the battery, and in turn, improving the kinetic performance and safety performance of the battery.

The glass transition temperature is a temperature at which a polymer transitions from a highly elastic state to a glassy state, and means a temperature at which an amorphous polymer (including a non-crystalline part of a crystalline polymer) transitions from a glassy state to a highly elastic state or from a highly elastic state to a glassy state, and is the lowest temperature at which a macromolecular segment of the amorphous polymer can move freely, typically denoted by Tg. At a temperature above the glass transition temperature, the polymer exhibits elasticity. At a temperature below the glass transition temperature, the polymer exhibits brittleness. The glass transition temperature may be measured by a method commonly used in this field, for example, measured by differential scanning calorimetry with reference to the standard GB/T 19466.2.

Understandably, the first glass transition temperature is greater than the second glass transition temperature. At a temperature above the second glass transition temperature, a structure that exhibits the second glass transition temperature within the polymer is in a rubbery state. At a temperature below the first glass transition temperature, a structure that exhibits the first glass transition temperature within the polymer is in a glassy state.

For example, the temperature of the polymer lies between the second glass transition temperature and the first glass transition temperature. At this temperature, when no pressure is applied to the polymer, the structure exhibiting the first glass transition temperature in the polymer is in a glassy state, and is relatively hard and can serve as a skeleton structure of the polymer powder, thereby making the polymer non-sticky. At this temperature, the structure exhibiting the second glass transition temperature in the polymer is in a rubbery state, and can be "flowable" to some extent under a specified pressure. The structure exhibiting the second glass transition temperature in the polymer can fully penetrate into the pores of the positive and negative electrode plates and the separator, thereby increasing the mechanical interlocking effect, giving full play to the bonding properties, and in turn, improving the kinetic performance of the battery.

In some embodiments of this application, the first glass transition temperature of the polymer is 30 °C to 75 °C, for example, 35 °C to 70 °C, 40 °C to 65 °C, 45 °C to 60 °C, 50 °C to 55 °C, or the like. The second glass transition temperature of the polymer is -10 °C to 25 °C, for example, -5 °C to 20 °C, 0 °C to 15 °C, 5 °C to 10 °C, or the like. In this way, in a case that the first glass transition temperature and the second glass transition temperature of the polymer fall within the above range, at room temperature (25 °C < room temperature < 30 °C), when no pressure is applied to the polymer, because the first glass transition temperature is higher than the room temperature, the structure exhibiting the first glass transition

temperature in the polymer is in a glassy state, and is relatively hard and can serve as a skeleton structure of the polymer powder, thereby making the polymer non-sticky. At the room temperature, because the second glass transition temperature is lower than the room temperature, the structure exhibiting the second glass transition temperature in the polymer is in a rubbery state, and can be "flowable" to some extent under a specified pressure. The structure exhibiting the second glass transition temperature in the polymer can fully penetrate into the pores of the positive and negative electrode plates and the separator, thereby increasing the mechanical interlocking effect, giving full play to the bonding properties, and in turn, improving the kinetic performance of the battery.

A second aspect of this application provides a method for preparing a polymer. The method includes: mixing an organic polymer and an inorganic compound, where polymerization monomers of the organic polymer include a first monomer and a second monomer, and a structural formula of the first monomer includes:

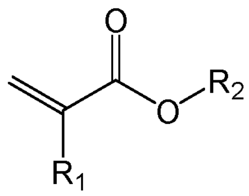

In the formula above, $R_1$ includes a hydrogen atom or a $C_1$ to $C_6$ alkyl group; $R_2$ includes a hydrogen atom, a substituted or unsubstituted $C_1$ to $C_{21}$ alkyl group, a $C_3$ to $C_6$ cycloalkyl group, and a substituted or unsubstituted isobornyl group; and a substituent in the substituted $C_1$ to $C_{21}$ alkyl group includes a hydroxyl group; and the second monomer includes an alkenyl group.

In some embodiments of this application, the method for preparing a polymer includes:

mixing water, an emulsifier, an initiator, a first monomer, and a second monomer, and heating the mixture to let constituents react to obtain an organic polymer emulsion; and
mixing the organic polymer emulsion with an inorganic compound to obtain a polymer.

In some embodiments of this application, the organic polymer may be prepared from the first monomer and the second monomer by emulsion polymerization, or prepared from the first monomer, the second monomer, and the third monomer by emulsion polymerization, or prepared from the first monomer, the second monomer, the third monomer, and the fourth monomer by emulsion polymerization.

In this application, an organic polymer emulsion is obtained by emulsion polymerization, and then the organic polymer emulsion is mixed with an inorganic compound, and the mixture is spray-dried to obtain a polymer.

Emulsion polymerization: Emulsion polymerization is a process in which monomers are dispersed in water to form an emulsion with the aid of an emulsifier and mechanical stirring, and then an initiator is added to initiate the polymerization of the monomers.

Emulsifier: An emulsifier is substance that can transform non-intermiscible oil and water into an emulsion that is difficult to separate into layers. Emulsifiers are typically surfactants that possess both the properties of a hydrophilic polar group and the properties of a hydrophobic (lipophilic) non-polar group. For example, the emulsifier includes at least one of sodium dodecyl sulfonate, sodium dodecylbenzene sulfonate, sodium dodecyl sulfate, sodium dodecylbenzene sulfate, sodium laurate, sodium stearate, or sodium palmitoleate.

Initiator: An initiator is a substance that can initiate a polymerization reaction of monomers. For example, a free radical initiator is a type of compounds that are easily pyrolyzed into free radicals (that is, primary free radicals), and may be used to initiate free radical polymerization and copolymerization reactions of olefin monomers and diene monomers. For example, the initiator includes at least one of potassium persulfate, ammonium persulfate, azobisisobutyronitrile, dimethyl azobisisobutyrate, benzoyl peroxide, or di-n-octanoyl peroxide.

Water, the emulsifier, the initiator, and the constituent monomers of the polymer are mixed and stirred. The water and the emulsifier are stirred and dispersed to form an emulsion. In other words, the emulsifier forms micelles in an aqueous phase, and monomers are solubilized in most of the micelles. When heated, the initiator initiates polymerization of the monomers inside the micelles to obtain an emulsion.

Spray-drying: The material to be dried (a mixture of the organic polymer emulsion and a dispersant) is mechanically dispersed to form tiny mist-like particles (so as to increase the water evaporation area and accelerate the drying process). The particles come into contact with hot air, thereby instantly removing most of the water and drying the solid substance in the material into powder.

A third aspect of this application provides a separator. The separator includes the polymer according to the first aspect of this application or a polymer prepared by the method according to the second aspect of this application. Therefore, when applied to a separator, the polymer of this application can improve the adhesiveness between the

separator and the electrode plate, reduce the resistance of the separator, increase the ion conductivity of the separator, and in turn, improve the battery performance.

In some embodiments of this application, the ionic conductivity of the separator is 0.3 $mS\cdot cm^{-1}$ to 0.6 $mS\cdot cm^{-1}$, for example, 0.35 $mS\cdot cm^{-1}$ to 0.55 $mS\cdot cm^{-1}$, 0.4 $mS\cdot cm^{-1}$ to 0.5 $mS\cdot cm^{-1}$, 0.45 $mS\cdot cm^{-1}$ to 0.5 $mS\cdot cm^{-1}$, or the like. Conductivity is a measure of the ability of the separator to conduct current, measured in siemens per meter (S/m). The ionic conductivity of the separator of this application falls within the above range, thereby giving full play to the conductive performance and bonding properties of the separator, and further improving the kinetic performance of the secondary battery. In some other embodiments of this application, the ionic conductivity of the separator is 0.35 $mS\cdot cm^{-1}$ to 0.55 $mS\cdot cm^{-1}$.

It is hereby noted that the ionic conductivity of the polymer in this application is tested by the following method: cutting a separator into 40 mm × 20 mm specimens, stacking the cut separator specimens into groups of 4 layers each; and infiltrating the separator thoroughly by using a commercial electrolyte solution, and then assembling a test-piece symmetric cell in a glovebox by using the infiltrated separator, where the electrolyte solution is prepared by the following steps: mixing ethylene carbonate (EC), ethyl methyl carbonate (EMC), and diethyl carbonate (DEC) at a volume ratio of 1: 1: 1 at 25 °C to obtain a mixed solvent, and then dissolving $LiPF_6$ in the mixed solution to obtain the electrolyte solution, in which the concentration of $LiPF_6$ is 1 mol/L. Measuring the resistance of the separator in an electrochemical workstation in a frequency range of 1 Hz to 100,000 Hz by applying an alternating-current signal with a polarization of 5 mV. Calculating the ionic conductivity from the measured result of the alternating-current resistance according to the following formula:

$$\delta = 1000\ L/RA$$

In the formula above, $\delta$ represents ion conductivity, measured in mS/cm; A represents the area of the separator in a single layer, measured in $cm^2$; L represents the thickness of the test-piece separator, measured in cm; and R represents the resistance of the test-piece separator, measured in $\Omega$.

In some embodiments of this application, the separator of this application includes a base film and an adhesive layer. The adhesive layer is formed on at least one side of the base film. The adhesive layer includes the polymer according to the first aspect of this application or a polymer prepared by the method according to the second aspect of this application. For example, the adhesive layer is formed on both of the two opposite sides of the base film.

The type of the base film is not particularly limited herein, and may be any well-known porous base film that is highly stable both chemically and mechanically.

In some embodiments of this application, the base film may include at least one of glass fiber, non-woven fabric, polyethylene, polypropylene, or polyvinylidene difluoride. The base film may be a single-layer film or a multilayer composite film, without being particularly limited herein. When the base film is a multilayer composite film, materials of different layers may be identical or different, without being particularly limited.

The separator of this application may be prepared by a conventional method in the art. An exemplary preparation method may include: Dissolving the polymer according to the first aspect of this application in an organic solvent to obtain a slurry, applying the slurry onto the base film, and then drying the slurry to remove the organic solvent and obtain a separator of this application.

In some embodiments of this application, the coating density of the polymer on one side of the base film is 0.3 $g/m^2$ to 1.0 $g/m^2$, for example, 0.4 $g/m^2$ to 0.9 $g/m^2$, 0.5 $g/m^2$ to 0.8 $g/m^2$, 0.6 $g/m^2$ to 0.7 $g/m^2$, or the like, thereby increasing the adhesion between the separator and the electrode plate, and improving the kinetic performance and safety performance of the battery. In some other embodiments of this application, the coating density of the polymer on one side of the base film may be 0.3 $g/m^2$ to 0.8 $g/m^2$.

It is hereby noted that the coating density of the polymer on one side of the base film means the coating amount of the polymer on one side of the base film, and may be tested by the following method: cutting out a specified area denoted as S in $m^2$ from a separator, weighing the cut-out separator (containing an adhesive layer that includes the polymer), and recording the mass as $M_1$ in units of g. Weighing out another section of the separator, where the section covers the same area S and is not coated with a binder. Recording the mass of this section of separator as $M_2$ in units of g. Calculating the coating density of the polymer on one side of the base film as: coating density = $(M_1 - M_2)/S$.

A fourth aspect of this application provides an electrode plate. The electrode plate includes the polymer according to the first aspect of this application or a polymer prepared by the method according to the second aspect of this application, thereby improving the ion conductivity and structural stability of the electrode plate, and improving the kinetic performance and safety performance of the battery.

It is hereby noted that the electrode plate of this application may be a positive electrode plate or a negative electrode plate.

The positive electrode plate includes a positive current collector and a positive active material layer disposed on at least one surface of the positive current collector. The positive active material layer includes the polymer according to the first aspect of this application or a polymer prepared by the method according to the second aspect. Specifically, the

polymer may serve as a binder in the positive active material layer.

As an example, the positive current collector includes two surfaces opposite to each other in a thickness direction of the current collector. The positive active material layer is disposed on one or both of the two opposite surfaces of the positive current collector.

In some embodiments of this application, the positive current collector may be metal foil or a composite current collector. For example, the metal foil may be aluminum foil. The composite current collector may include a polymer material substrate and a metal layer formed on at least one surface of the polymer material substrate. The composite current collector may be formed by overlaying a polymer material substrate with a metal material (for example, aluminum, aluminum alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments of this application, the positive active material may be a positive active material that is well known for use in a battery in the art.

As an example, when the positive electrode plate is applied to a lithium-ion battery, the positive active material may be a positive active material well-known in the art for use in a lithium-ion battery. As an example, the positive active material may include at least one of the following materials: olivine-structured lithium-containing phosphate, lithium transition metal oxide, and a modified compound thereof. However, this application is not limited to such materials, and other conventional materials usable as a positive active material of a battery may be used instead. Of such positive active materials, one may be used alone, or at least two may be used in combination. Examples of the lithium transition metal oxide may include, but are not limited to, at least one of lithium cobalt oxide (such as $LiCoO_2$), lithium nickel oxide (such as $LiNiO_2$), lithium manganese oxide (such as $LiMnO_2$ and $LiMn_2O_4$), lithium nickel cobalt oxide, lithium manganese cobalt oxide, lithium nickel manganese oxide, lithium nickel cobalt manganese oxide (such as $LiNi_{1/3}Co_{1/3}Mn_{1/3}O_2$ (briefly referred to as NCM333), $LiNi_{0.5}Co_{0.2}Mn_{0.3}O_2$ (briefly referred to as NCM523), $LiNi_{0.5}Co_{0.25}Mn_{0.25}O_2$ (briefly referred to as NCM211), $LiNi_{0.6}Co_{0.2}Mn_{0.2}O_2$ (briefly referred to as NCM622), $LiNi_{0.8}Co_{0.1}Mn_{0.1}O_2$ (briefly referred to as NCM811), lithium nickel cobalt aluminum oxide (such as $LiNi_{0.80}Co_{0.15}Al_{0.05}O_2$), or a modified compound thereof. Examples of the olivine-structured lithium-containing phosphate may include, but are not limited to, at least one of lithium iron phosphate (such as $LiFePO_4$ (briefly referred to as LFP)), a composite of lithium iron phosphate and carbon, lithium manganese phosphate (such as $LiMnPO_4$), a composite of lithium manganese phosphate and carbon, lithium manganese iron phosphate, or a composite of lithium manganese iron phosphate and carbon.

As an example, when the positive electrode plate is applied to a sodium-ion battery, the positive active material may be a positive active material well-known in the art for use in a sodium-ion battery. As an example, the positive active materials may include, but are not limited to, at least one of a layered transition metal oxide, a polyanionic compound, or a Prussian blue analogue.

Examples of the layered transition metal oxide include:

$Na_{1-x}Cu_hFe_kMn_lM^1_mO_{2-y}$, where $M^1$ is at least one of Li, Be, B, Mg, Al, K, Ca, Ti, Co, Ni, Zn, Ga, Sr, Y, Nb, Mo, In, Sn, or Ba, $0 < x \leq 0.33$, $0 < h \leq 0.24$, $0 \leq k \leq 0.32$, $0 < l \leq 0.68$, $0 \leq m < 0.1$, $h + k + l + m = 1$, and $0 \leq y < 0.2$;
$Na_{0.67}Mn_{0.7}Ni_zM^2_{0.3-z}O_2$, where $M^2$ includes at least one of Li, Mg, Al, Ca, Ti, Fe, Cu, Zn, or Ba, and $0 < z \leq 0.1$;
$Na_aLi_bNi_cMn_dFe_eO_2$, where $0.67 < a \leq 1$, $0 < b < 0.2$, $0 < c < 0.3$, $0.67 < d + e < 0.8$, and $b + c + d + e = 1$.

Examples of the polyanionic compound include:

$A^1_fM^3_g(PO_4)_iO_jX^1_{3-j}$, where $A^1$ includes at least one of H, Li, Na, K, $NH_4$; $M^3$ includes at least one of Ti, Cr, Mn, Fe, Co, Ni, V, Cu, or Zn; $X^1$ is at least one of F, Cl, or Br; $0 < f \leq 4$, $0 < g \leq 2$, $1 \leq i \leq 3$, and $0 \leq j \leq 2$;
$Na_nM^4PO_4X^2$, where $M^4$ includes at least one of Mn, Fe, Co, Ni, Cu, or Zn; $X^2$ is at least one of F, Cl, or Br, $0 < n \leq 2$;
$Na_pM^5_q(SO_4)_3$, where $M^5$ includes at least one of Mn, Fe, Co, Ni, Cu, or Zn; $0 < p \leq 2$, $0 < q \leq 2$; and
$Na_sMn_tFe_{3-t}(PO_4)_2(P_2O_7)$, where $0 < s \leq 4$, $0 \leq t \leq 3$, for example, t is 0, 1, 1.5, 2, or 3.

Examples of the Prussian blue analogue include:
$A_uM^6_v[M^7(CN)_6]_w \cdot xH_2O$, where A includes at least one of $H^+$, $NH_4^+$, an alkali metal cation, or alkaline earth metal cation, $M^6$ and $M^7$ each independently include at least one of transition metal cations, $0 < u \leq 2$, $0 < v \leq 1$, $0 < w \leq 1$, and $0 < x < 6$. For example, A includes at least one of $H^+$, $Li^+$, $Na^+$, $K^+$, $NH_4^+$, $Rb^+$, $Cs^+$, $Fr^+$, $Be^{2+}$, $Mg^{2+}$, $Ca^{2+}$, $Sr^{2+}$, $Ba^{2+}$, or $Ra^{2+}$; and $M^6$ and $M^7$ each independently include a cation of at least one of Ti, V, Cr, Mn, Fe, Co, Ni, Cu, Zn, Sn, or W.

In some embodiments of this application, the positive active material layer further optionally includes a conductive agent. As an example, the conductive agent may include at least one of superconductive carbon, acetylene black, carbon black, Ketjen black, carbon dots, carbon nanotubes, graphene, or carbon nanofibers.

In some embodiments of this application, the positive active material layer further optionally includes other binders. As an example, the other binders may include at least one of polyvinylidene difluoride (PVDF), polytetrafluoroethylene (PTFE), poly(vinylidene fluoride-co-tetrafluoroethylene-co-propylene), poly (vinylidene fluoride-co-hexafluoropropylene-co-tetrafluoroethylene), poly(tetrafluoroethylene-co-hexafluoropropylene), or fluorinated acrylate resin.

In some embodiments, the positive electrode plate may be prepared according to the following method: dispersing the constituents of the positive electrode plate such as the positive active material, the conductive agent, the polymer, and any other constituents into a solvent (such as N-methylpyrrolidone) to form a positive electrode slurry, coating a positive current collector with the positive electrode slurry, and performing steps such as drying and cold pressing to obtain the positive electrode plate.

In some embodiments of this application, based on a total mass of the positive active material layer, a mass percent of the polymer in the positive electrode plate is 1% to 3%, for example, 1.2% to 2.8%, 1.5% to 2.5%, 1.8% to 2.2%, 2% to 2.2%, or the like. In this way, the probability of powder shedding from the positive electrode plate is reduced, thereby improving the kinetic performance of the battery containing the electrode plate.

Similarly, the electrode plate of this application may be a negative electrode plate. The negative electrode plate includes a negative current collector and a negative active material layer disposed on at least one surface of the negative current collector. The negative active material layer includes the polymer according to the first aspect of this application or a polymer prepared by the method according to the second aspect of this application. Specifically, the polymer may serve as a binder in the negative active material layer.

As an example, the negative current collector includes two surfaces opposite to each other in a thickness direction of the negative current collector. The negative active material layer is disposed on either or both of the two opposite surfaces of the negative current collector.

In some embodiments of this application, the negative current collector may be metal foil or a composite current collector. For example, the metal foil may be copper foil. The composite current collector may include a polymer material substrate and a metal layer formed on at least one surface of the polymer material substrate. The composite current collector may be formed by overlaying a polymer material substrate with a metal material (for example, copper, copper alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments of this application, the negative active material may be a negative active material well-known in the art for use in a battery. As an example, the negative active material may include at least one of the following materials: artificial graphite, natural graphite, soft carbon, hard carbon, silicon-based material, tin-based material, lithium titanium oxide, and the like. The silicon-based material may include at least one of elemental silicon, a silicon oxide compound, a silicon-carbon composite, a silicon-nitrogen composite, or a silicon alloy. The tin-based material may include at least one of elemental tin, a tin oxide compound, or a tin alloy. However, this application is not limited to such materials, and other conventional materials usable as a negative active material of a battery may be used instead. One of the negative active materials may be used alone, or at least two thereof may be used in combination.

In some embodiments of this application, the negative active material layer further optionally includes a conductive agent. The conductive agent may include at least one of superconductive carbon, acetylene black, carbon black, Ketjen black, carbon dots, carbon nanotubes, graphene, or carbon nanofibers.

In some embodiments of this application, the negative active material layer further optionally includes other binders. The other binders may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethyl acrylic acid (PMAA), or carboxymethyl chitosan (CMCS).

In some embodiments of this application, the negative active material layer further optionally includes other additives, such as a thickener, for example, sodium carboxymethyl cellulose (CMC-Na).

In some embodiments of this application, the negative electrode plate may be prepared according to the following method: dispersing the constituents of the negative electrode plate such as the negative active material, the conductive agent, the polymer, and other optional constituents in a solvent (such as deionized water) to form a negative slurry, coating a negative current collector with the negative slurry, and performing steps such as drying and cold pressing to obtain the negative electrode plate.

In some embodiments of this application, based on a total mass of the negative active material layer, a mass percent of the polymer in the negative electrode plate is 1% to 3%, for example, 1.2% to 2.8%, 1.5% to 2.5%, 1.8% to 2.2%, 2% to 2.2%, or the like. In this way, the probability of powder shedding from the negative electrode plate is reduced, thereby improving the kinetic performance of the battery containing the electrode plate.

A fifth aspect of this application discloses a battery. The battery includes the separator according to the third aspect and/or the electrode plate according to the fourth aspect. Therefore, the battery exhibits excellent kinetic performance and safety performance.

Generally, a battery includes a positive electrode plate, a negative electrode plate, an electrolyte, and a separator. In a charge-and-discharge cycle of the battery, active ions are shuttled between the positive electrode plate and the negative electrode plate by intercalation and deintercalation. The electrolyte serves to conduct ions between the

positive electrode plate and the negative electrode plate. Disposed between the positive electrode plate and the negative electrode plate, the separator primarily serves to prevent a short circuit between the positive electrode plate and the negative electrode plate while allowing passage of ions.

The type of the electrolyte is not particularly limited in this application, and may be selected as required. For example, the electrolyte may be in a liquid state or gel state, or all solid state.

In some embodiments of this application, the electrolyte is an electrolyte solution. The electrolyte solution includes an electrolyte salt and a solvent.

In some embodiments of this application, when the battery is a lithium-ion battery, the electrolyte salt may include at least one of lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluoro(oxalato)borate, lithium bis(oxalato)borate, lithium difluoro(bisoxalato)phosphate, or lithium tetrafluoro(oxalato)phosphate.

In some embodiments of this application, when the battery is a sodium-ion battery, the electrolyte sodium salt may include at least one of sodium hexafluorophosphate, sodium difluoro(oxalato)borate, sodium tetrafluoroborate, sodium bis(oxalato)borate, sodium perchlorate, sodium hexafluoroarsenate, sodium bis(fluorosulfonyl)imide, sodium trifluoromethanesulfonate, or sodium bis(trifluoromethanesulfonyl)imide.

In some embodiments of this application, the solvent may include at least one of ethylene carbonate, propylene carbonate, ethyl methyl carbonate, diethyl carbonate, dimethyl carbonate, dipropyl carbonate, methyl propyl carbonate, ethylene propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methyl sulfone, or (ethylsulfonyl)ethane.

In some embodiments of this application, the electrolyte solution further optionally includes an additive. For example, the additive may include a negative electrode film-forming additive or a positive electrode film-forming additive. The additive may further include an additive capable of improving specified performance of the battery, for example, an additive for improving overcharge performance of the battery, or an additive for improving high- or low-temperature performance of the battery.

In some embodiments, the battery may be in the form of a battery cell, a battery module, a battery pack, or the like.

In some embodiments, the positive electrode plate, the negative electrode plate, and the separator may be made into an electrode assembly by winding or stacking.

In some embodiments, the battery cell may include an outer package. The outer package may be configured to package the electrode assembly and the electrolyte.

In some embodiments, the outer package of the battery cell may be a hard shell such as a hard plastic shell, an aluminum shell, a steel shell, or the like. Alternatively, the outer package of the battery cell may be a soft package such as a pouch-type soft package. The soft package may be made of plastic such as polypropylene, polybutylene terephthalate, or polybutylene succinate.

The shape of the battery cell is not particularly limited in this application, and may be cylindrical, prismatic or in any other shape. For example, FIG. 1 shows a prismatic battery cell 1 as an example.

In some embodiments, referring to FIG. 2, the outer package may include a housing 11 and a cover plate 13. The housing 11 may include a bottom plate and a side plate connected to the bottom plate. The bottom plate and the side plate close in to form an accommodation cavity. The housing 11 is provided with an opening that communicates to the accommodation cavity. The cover plate 13 can be placed over the opening to seal the accommodation cavity. The positive electrode plate, the negative electrode plate, and the separator may be made into the electrode assembly 12 by winding or stacking. The electrode assembly 12 is packaged in the accommodation cavity. The electrolyte solution infiltrates in the electrode assembly 12. The number of electrode assemblies 12 included in a battery 1 may be one or more, and may be determined by a person skilled in the art as actually required.

In some embodiments, the battery cell may be assembled into a battery module. The battery module may include one or more battery cells, and the specific number of battery cells in a battery module may be selected by a person skilled in the art depending on the application scenario and capacity of the battery module.

FIG. 3 shows a battery module 2 as an example. Referring to FIG. 3, in the battery module 2, a plurality of battery cells 1 may be arranged sequentially along a length direction of the battery module 2. Alternatively, the secondary batteries may be arranged in any other manner. Further, the plurality of battery cells 1 may be fixed by a fastener.

Optionally, the battery module 2 may further include a shell that provides an accommodation space. The plurality of battery cells 1 are accommodated in the accommodation space.

In some embodiments, the battery module may be assembled to form a battery pack. The battery pack may include one or more battery modules, and the specific number of battery modules in a battery pack may be selected by a person skilled in the art depending on practical applications and capacity of the battery pack.

FIG. 4 and FIG. 5 show a battery pack 3 as an example. Referring to FIG. 4 and FIG. 5, the battery pack 1 may include a battery box and a plurality of battery modules 2 disposed in the battery box. The battery box includes an upper box

31 and a lower box 32. The upper box 31 fits the lower box 32 to form a closed space for accommodating the battery modules 2. The plurality of battery modules 2 may be arranged in the battery box in any manner.

Further, this application provides an electrical device. The electrical device includes the battery disclosed herein. The battery cell, battery module, or battery pack may be used as a power supply of the electrical device, or used as an energy storage unit of the electrical device. The electrical devices may include, but are not limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The battery cell, battery module, or battery pack may be selected for use in the electrical device according to practical requirements.

FIG. 6 shows an electrical device as an example. The electrical device may be a battery electric vehicle, a hybrid electric vehicle, a plug-in hybrid electric vehicle, or the like. The electrical device may adopt a battery pack or a battery module in order to meet the requirements of the electrical device on a high power and a high energy density of the secondary battery.

In another example, the device may be a mobile phone, a tablet computer, a notebook computer, or the like. The device is generally required to be thin and light, and may use a battery cell as a power supply.

The following describes some embodiments of this application. The embodiments described below are illustrative, and are merely intended to construe this application but not to limit this application. Unless techniques or conditions are otherwise expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

## Embodiment 1

### [Preparing an organic polymer 1]

Mixing well the required monomers at the following mass percentages: 25 wt% methyl methacrylate, 55 wt% n-butyl acrylate, 2 wt% acrylic acid, 3 wt% hydroxyethyl acrylate, 5 wt% trimethylolpropane triacrylate, and 10 wt% styrene. Adding 1000 grams of mixed monomers, 30 grams of sodium dodecyl sulfate as an emulsifier, 10 grams of ammonium persulfate as an initiator, and 1200 grams of deionized water into a 5000 mL four-necked flask equipped with a mechanical stirring unit, a thermometer, and a condenser pipe, and emulsifying the mixture by stirring at a high speed for 30 minutes. Raising the temperature to 75 °C under the protection of nitrogen, keeping reaction for 4 hours, and then adjusting the pH to a value of 6 to 8, reducing the temperature to below 40 °C, and outputting the product to obtain an organic polymer 1.

### [Preparing a polymer 1]

Taking 1 kg of organic polymer 1, adding 1 kg of nano-silicon dioxide and 2 kg of deionized water, stirring for 1 hour, spray-drying the mixture to obtain polymer powder, and then grinding and pulverizing the polymer powder to obtain a polymer 1.

### [Preparing a separator 1]

Dispersing the polymer 1 into water to obtain a slurry, and then applying the slurry onto a base film (PE base film), and then dehydrating the film to obtain a separator 1.

## Embodiment 2

### [Preparing an organic polymer 2]

Mixing well the required monomers at the following mass percentages: 25 wt% methyl methacrylate, 50 wt% n-butyl acrylate, 2 wt% acrylic acid, 3 wt% hydroxyethyl acrylate, 5 wt% trimethylolpropane triacrylate, and 15 wt% styrene. Adding 1000 grams of mixed monomers, 30 grams of sodium dodecyl sulfate as an emulsifier, 10 grams of ammonium persulfate as an initiator, and 1200 grams of deionized water into a 5000 mL four-necked flask equipped with a mechanical stirring unit, a thermometer, and a condenser pipe, and emulsifying the mixture by stirring at a high speed for 30 minutes. Raising the temperature to 75 °C under the protection of nitrogen, keeping reaction for 4 hours, and then adjusting the pH to a value of 6 to 8, reducing the temperature to below 40 °C, and outputting the product to obtain an organic polymer 2.

**[Preparing a polymer 2]**

Taking 1 kg of organic polymer 2, adding 1 kg of nano-silicon dioxide and 2 kg of deionized water, stirring for 1 hour, spray-drying the mixture to obtain polymer powder, and then grinding and pulverizing the polymer powder to obtain a polymer 2.

**[Preparing a separator 2]**

Dispersing the polymer 2 into water to obtain a slurry, and then applying the slurry onto a base film (PE base film), and then dehydrating the film to obtain a separator 2.

**Embodiment 3**

**[Preparing an organic polymer 3]**

Mixing well the required monomers at the following mass percentages: 25 wt% methyl methacrylate, 48 wt% n-butyl acrylate, 2 wt% acrylic acid, 3 wt% hydroxyethyl acrylate, 5 wt% trimethylolpropane triacrylate, and 17 wt% styrene. Adding 1000 grams of mixed monomers, 30 grams of sodium dodecyl sulfate as an emulsifier, 10 grams of ammonium persulfate as an initiator, and 1200 grams of deionized water into a 5000 mL four-necked flask equipped with a mechanical stirring unit, a thermometer, and a condenser pipe, and emulsifying the mixture by stirring at a high speed for 30 minutes. Raising the temperature to 75 °C under the protection of nitrogen, keeping reaction for 4 hours, and then adjusting the pH to a value of 6 to 8, reducing the temperature to below 40 °C, and outputting the product to obtain an organic polymer 3.

**[Preparing a polymer 3]**

Taking 1 kg of organic polymer 3, adding 1 kg of nano-silicon dioxide and 2 kg of deionized water, stirring for 1 hour, spray-drying the mixture to obtain polymer powder, and then grinding and pulverizing the polymer powder to obtain a polymer 3.

**[Preparing a separator 3]**

Dispersing the polymer 3 into water to obtain a slurry, and then applying the slurry onto a base film (PE base film), and then dehydrating the film to obtain a separator 3.

**Embodiment 4**

**[Preparing an organic polymer 4]**

Mixing well the required monomers at the following mass percentages: 14.5 wt% methyl methacrylate, 42 wt% n-butyl acrylate, 2 wt% acrylic acid, 3 wt% hydroxyethyl acrylate, 5 wt% trimethylolpropane triacrylate, and 33.5 wt% styrene. Adding 1000 grams of mixed monomers, 30 grams of sodium dodecyl sulfate as an emulsifier, 10 grams of ammonium persulfate as an initiator, and 1200 grams of deionized water into a 5000 mL four-necked flask equipped with a mechanical stirring unit, a thermometer, and a condenser pipe, and emulsifying the mixture by stirring at a high speed for 30 minutes. Raising the temperature to 75 °C under the protection of nitrogen, keeping reaction for 4 hours, and then adjusting the pH to a value of 6 to 8, reducing the temperature to below 40 °C, and outputting the product to obtain an organic polymer 4.

**[Preparing a polymer 4]**

Taking 1 kg of organic polymer 4, adding 1 kg of nano-silicon dioxide and 2 kg of deionized water, stirring for 4 hour, spray-drying the mixture to obtain polymer powder, and then grinding and pulverizing the polymer powder to obtain a polymer 1.

**[Preparing a separator 4]**

Dispersing the polymer 4 into water to obtain a slurry, and then applying the slurry onto a base film (PE base film), and then dehydrating the film to obtain a separator 4.

**Embodiment 5**

**[Preparing an organic polymer 5]**

Mixing well the required monomers at the following mass percentages: 28.5 wt% methyl methacrylate, 56.5 wt% n-butyl acrylate, 2 wt% acrylic acid, 3 wt% hydroxyethyl acrylate, 5 wt% trimethylolpropane triacrylate, 4 wt% styrene, and 1 wt% acrylonitrile. Adding 1000 grams of mixed monomers, 30 grams of sodium dodecyl sulfate as an emulsifier, 10 grams of ammonium persulfate as an initiator, and 1200 grams of deionized water into a 5000 mL four-necked flask equipped with a mechanical stirring unit, a thermometer, and a condenser pipe, and emulsifying the mixture by stirring at a high speed for 30 minutes. Raising the temperature to 75 °C under the protection of nitrogen, keeping reaction for 4 hours, and then adjusting the pH to a value of 6 to 8, reducing the temperature to below 40 °C, and outputting the product to obtain an organic polymer 5.

**[Preparing a polymer 5]**

Taking 1 kg of organic polymer 5, adding 667 grams of nano-silicon dioxide and 2 kg of deionized water, stirring for 1 hour, spray-drying the mixture to obtain polymer powder, and then grinding and pulverizing the polymer powder to obtain a polymer 5.

**[Preparing a separator 5]**

Dispersing the polymer 5 into water to obtain a slurry, and then applying the slurry onto a base film (PE base film), and then dehydrating the film to obtain a separator 5.

**Embodiment 6**

**[Preparing an organic polymer 6]**

Mixing well the required monomers at the following mass percentages: 30 wt% methyl methacrylate, 50 wt% n-butyl acrylate, 2 wt% acrylic acid, 3 wt% hydroxyethyl acrylate, 5 wt% trimethylolpropane triacrylate, 5 wt% styrene, and 5 wt% acrylonitrile. Adding 1000 grams of mixed monomers, 30 grams of sodium dodecyl sulfate as an emulsifier, 10 grams of ammonium persulfate as an initiator, and 1200 grams of deionized water into a 5000 mL four-necked flask equipped with a mechanical stirring unit, a thermometer, and a condenser pipe, and emulsifying the mixture by stirring at a high speed for 30 minutes. Raising the temperature to 75 °C under the protection of nitrogen, keeping reaction for 4 hours, and then adjusting the pH to a value of 6 to 8, reducing the temperature to below 40 °C, and outputting the product to obtain an organic polymer 6.

**[Preparing a polymer 6]**

Taking 1 kg of organic polymer 6, adding 429 grams of nano-silicon dioxide and 2 kg of deionized water, stirring for 1 hour, spray-drying the mixture to obtain polymer powder, and then grinding and pulverizing the polymer powder to obtain a polymer 6.

**[Preparing a separator 6]**

Dispersing the polymer 6 into water to obtain a slurry, and then applying the slurry onto a base film (PE base film), and then dehydrating the film to obtain a separator 6.

**Embodiment 7**

**[Preparing an organic polymer 7]**

Mixing well the required monomers at the following mass percentages: 15 wt% methyl methacrylate, 45 wt% n-butyl acrylate, 2 wt% acrylic acid, 3 wt% hydroxyethyl acrylate, 5 wt% trimethylolpropane triacrylate, 10 wt% styrene, and 20 wt% acrylonitrile. Adding 1000 grams of mixed monomers, 30 grams of sodium dodecyl sulfate as an emulsifier, 10 grams of ammonium persulfate as an initiator, and 1200 grams of deionized water into a 5000 mL four-necked flask equipped with a mechanical stirring unit, a thermometer, and a condenser pipe, and emulsifying the mixture by stirring at a high speed for 30 minutes. Raising the temperature to 75 °C under the protection of nitrogen, keeping reaction for 4 hours, and then adjusting the pH to a value of 6 to 8, reducing the temperature to below 40 °C, and outputting the product to obtain an organic polymer 7.

**[Preparing a polymer 7]**

Taking 1 kg of organic polymer 7, adding 250 grams of nano-silicon dioxide and 1 kg of deionized water, stirring for 1 hour, spray-drying the mixture to obtain polymer powder, and then grinding and pulverizing the polymer powder to obtain a polymer 7.

**[Preparing a separator 7]**

Dispersing the polymer 7 into water to obtain a slurry, and then applying the slurry onto a base film (PE base film), and then dehydrating the film to obtain a separator 7.

**Embodiment 8**

**[Preparing an organic polymer 8]**

Mixing well the required monomers at the following mass percentages: 6 wt% methyl methacrylate, 42 wt% n-butyl acrylate, 2 wt% acrylic acid, 3 wt% hydroxyethyl acrylate, 5 wt% trimethylolpropane triacrylate, 7 wt% styrene, and 35 wt% acrylonitrile. Adding 1000 grams of mixed monomers, 30 grams of sodium dodecyl sulfate as an emulsifier, 10 grams of ammonium persulfate as an initiator, and 1200 grams of deionized water into a 5000 mL four-necked flask equipped with a mechanical stirring unit, a thermometer, and a condenser pipe, and emulsifying the mixture by stirring at a high speed for 30 minutes. Raising the temperature to 75 °C under the protection of nitrogen, keeping reaction for 4 hours, and then adjusting the pH to a value of 6 to 8, reducing the temperature to below 40 °C, and outputting the product to obtain an organic polymer 8.

**[Preparing a polymer 8]**

Taking 1 kg of organic polymer 8, adding 111 grams of nano-silicon dioxide and 1 kg of deionized water, stirring for 1 hour, spray-drying the mixture to obtain polymer powder, and then grinding and pulverizing the polymer powder to obtain a polymer 8.

**[Preparing a separator 8]**

Dispersing the polymer 8 into water to obtain a slurry, and then applying the slurry onto a base film (PE base film), and then dehydrating the film to obtain a separator 8.

**Embodiment 9**

**[Preparing an organic polymer 9]**

Mixing well the required monomers at the following mass percentages: 40 wt% n-butyl acrylate, 2 wt% acrylic acid, 3 wt% hydroxyethyl acrylate, 5 wt% trimethylolpropane triacrylate, 10 wt% styrene, and 40 wt% acrylonitrile. Adding 1000 grams of mixed monomers, 30 grams of sodium dodecyl sulfate as an emulsifier, 10 grams of ammonium persulfate as an initiator, and 1200 grams of deionized water into a 5000 mL four-necked flask equipped with a mechanical stirring unit, a thermometer, and a condenser pipe, and emulsifying the mixture by stirring at a high speed for 30 minutes. Raising the temperature to 75 °C under the protection of nitrogen, keeping reaction for 4 hours, and then adjusting the pH to a value of 6 to 8, reducing the temperature to below 40 °C, and outputting the product to obtain an organic polymer 9.

**[Preparing a polymer 9]**

Taking 1 kg of organic polymer 9, adding 53 grams of nano-silicon dioxide and 1 kg of deionized water, stirring for 1 hour, spray-drying the mixture to obtain polymer powder, and then grinding and pulverizing the polymer powder to obtain a polymer 9.

**[Preparing a separator 9]**

Dispersing the polymer 9 into water to obtain a slurry, and then applying the slurry onto a base film (PE base film), and then dehydrating the film to obtain a separator 9.

**Embodiment 10**

**[Preparing an organic polymer 10]**

Mixing well the required monomers at the following mass percentages: 5 wt% methyl methacrylate, 65 wt% n-butyl acrylate, 2 wt% acrylic acid, 3 wt% hydroxyethyl acrylate, 5 wt% trimethylolpropane triacrylate, 10 wt% styrene, 6 wt% acrylonitrile, and 4 wt% acrylamide. Adding 1000 grams of mixed monomers, 30 grams of sodium dodecyl sulfate as an emulsifier, 10 grams of ammonium persulfate as an initiator, and 1200 grams of deionized water into a 5000 mL four-necked flask equipped with a mechanical stirring unit, a thermometer, and a condenser pipe, and emulsifying the mixture by stirring at a high speed for 30 minutes. Raising the temperature to 75 °C under the protection of nitrogen, keeping reaction for 4 hours, and then adjusting the pH to a value of 6 to 8, reducing the temperature to below 40 °C, and outputting the product to obtain an organic polymer 10.

**[Preparing a polymer 10]**

Taking 1 kg of organic polymer 10, adding 10 grams of nano-silicon dioxide and 1 kg of deionized water, stirring for 1 hour, spray-drying the mixture to obtain polymer powder, and then grinding and pulverizing the polymer powder to obtain a polymer 10.

**[Preparing a separator 10]**

Dispersing the polymer 10 into water to obtain a slurry, and then applying the slurry onto a base film (PE base film), and then dehydrating the film to obtain a separator 10.

**Embodiment 11**

**[Preparing an organic polymer 11]**

Mixing well the required monomers at the following mass percentages: 58 wt% n-butyl acrylate, 2 wt% acrylic acid, 3 wt% hydroxyethyl acrylate, 5 wt% trimethylolpropane triacrylate, 10 wt% styrene, 15 wt% acrylonitrile, and 7% acrylamide. Adding 1000 grams of mixed monomers, 30 grams of sodium dodecyl sulfate as an emulsifier, 10 grams of ammonium persulfate as an initiator, and 1200 grams of deionized water into a 5000 mL four-necked flask equipped with a mechanical stirring unit, a thermometer, and a condenser pipe, and emulsifying the mixture by stirring at a high speed for 30 minutes. Raising the temperature to 75 °C under the protection of nitrogen, keeping reaction for 4 hours, and then adjusting the pH to a value of 6 to 8, reducing the temperature to below 40 °C, and outputting the product to obtain an organic polymer 11.

**[Preparing a polymer 11]**

Taking 1 kg of organic polymer 11, adding 53 grams of nano-silicon dioxide and 1 kg of deionized water, stirring for 1 hour, spray-drying the mixture to obtain polymer powder, and then grinding and pulverizing the polymer powder to obtain a polymer 11.

**[Preparing a separator 11]**

Dispersing the polymer 11 into water to obtain a slurry, and then applying the slurry onto a base film (PE base film), and then dehydrating the film to obtain a separator 11.

**Embodiment 12**

**[Preparing an organic polymer 12]**

Mixing well the required monomers at the following mass percentages: 58 wt% n-butyl acrylate, 2 wt% acrylic acid, 3 wt% hydroxyethyl acrylate, 5 wt% trimethylolpropane triacrylate, 10 wt% styrene, 15 wt% acrylonitrile, and 7% acrylamide. Adding 1000 grams of mixed monomers, 30 grams of sodium dodecyl sulfate as an emulsifier, 10 grams of ammonium persulfate as an initiator, and 1200 grams of deionized water into a 5000 mL four-necked flask equipped with a mechanical stirring unit, a thermometer, and a condenser pipe, and emulsifying the mixture by stirring at a high speed for 30 minutes. Raising the temperature to 75 °C under the protection of nitrogen, keeping reaction for 4 hours, and then adjusting

the pH to a value of 6 to 8, reducing the temperature to below 40 °C, and outputting the product to obtain an organic polymer 12.

**[Preparing a polymer 12]**

Taking 1 kg of organic polymer 12, adding 53 grams of nano-silicon dioxide and 1 kg of deionized water, stirring for 1 hour, spray-drying the mixture to obtain polymer powder, and then grinding and pulverizing the polymer powder to obtain a polymer 12.

**[Preparing a separator 12]**

Dispersing the polymer 12 into water to obtain a slurry, and then applying the slurry onto a base film (PE base film), and then dehydrating the film to obtain a separator 112.

**Embodiment 13**

**[Preparing an organic polymer 13]**

Mixing well the required monomers at the following mass percentages: 58 wt% n-butyl acrylate, 2 wt% acrylic acid, 3 wt% hydroxyethyl acrylate, 5 wt% trimethylolpropane triacrylate, 10 wt% styrene, 15 wt% acrylonitrile, 7% acrylamide, 8 wt% styrene, 32 wt% acrylonitrile, and 20% acrylamide. Adding 1000 grams of mixed monomers, 30 grams of sodium dodecyl sulfate as an emulsifier, 10 grams of ammonium persulfate as an initiator, and 1200 grams of deionized water into a 5000 mL four-necked flask equipped with a mechanical stirring unit, a thermometer, and a condenser pipe, and emulsifying the mixture by stirring at a high speed for 30 minutes. Raising the temperature to 75 °C under the protection of nitrogen, keeping reaction for 4 hours, and then adjusting the pH to a value of 6 to 8, reducing the temperature to below 40 °C, and outputting the product to obtain an organic polymer 13.

**[Preparing a polymer 13]**

Taking 1 kg of organic polymer 13, adding 53 grams of nano-silicon dioxide and 1 kg of deionized water, stirring for 1 hour, spray-drying the mixture to obtain polymer powder, and then grinding and pulverizing the polymer powder to obtain a polymer 13.

**[Preparing a separator 13]**

Dispersing the polymer 13 into water to obtain a slurry, and then applying the slurry onto a base film (PE base film), and then dehydrating the film to obtain a separator 13.

**Embodiment 14**

**[Preparing an organic polymer 14]**

Mixing well the required monomers at the following mass percentages: 40 wt% n-butyl acrylate, 2 wt% acrylic acid, 3 wt% hydroxyethyl acrylate, 5 wt% trimethylolpropane triacrylate, 10 wt% styrene, 10 wt% acrylonitrile, and 30% acrylamide. Adding 1000 grams of mixed monomers, 30 grams of sodium dodecyl sulfate as an emulsifier, 10 grams of ammonium persulfate as an initiator, and 1200 grams of deionized water into a 5000 mL four-necked flask equipped with a mechanical stirring unit, a thermometer, and a condenser pipe, and emulsifying the mixture by stirring at a high speed for 30 minutes. Raising the temperature to 75 °C under the protection of nitrogen, keeping reaction for 4 hours, and then adjusting the pH to a value of 6 to 8, reducing the temperature to below 40 °C, and outputting the product to obtain an organic polymer 14.

**[Preparing a polymer 14]**

Taking 1 kg of organic polymer 14, adding 53 grams of nano-silicon dioxide and 1 kg of deionized water, stirring for 1 hour, spray-drying the mixture to obtain polymer powder, and then grinding and pulverizing the polymer powder to obtain a polymer 14.

**[Preparing a separator 14]**

Dispersing the polymer 11 into water to obtain a slurry, and then applying the slurry onto a base film (PE base film), and then dehydrating the film to obtain a separator 14.

**Embodiment 15**

**[Preparing an organic polymer 15]**

Mixing well the required monomers at the following mass percentages: 65 wt% butyl acrylate, 5 wt% trimethylolpropane triacrylate, 2 wt% acrylic acid, 3 wt% 2-hydroxyethyl acrylate, 5 wt% styrene, 15 wt% acrylonitrile, and 5 wt% acrylamide. Adding 1000 grams of mixed monomers, 30 grams of sodium dodecyl sulfate as an emulsifier, 10 grams of ammonium persulfate as an initiator, and 1200 grams of deionized water into a 5000 mL four-necked flask equipped with a mechanical stirring unit, a thermometer, and a condenser pipe, and emulsifying the mixture by stirring at a high speed for 30 minutes. Raising the temperature to 75 °C under the protection of nitrogen, keeping reaction for 4 hours, and then adjusting the pH to a value of 6 to 8, reducing the temperature to below 40 °C, and outputting the product to obtain an organic polymer 15.

**[Preparing a polymer 15]**

Taking 1 kg of organic polymer 15, adding 429 grams of aluminum oxide and 1 kg of deionized water, stirring for 1 hour, spray-drying the mixture to obtain polymer powder, and then grinding and pulverizing the polymer powder to obtain a polymer 15.

**[Preparing a separator 15]**

Dispersing the polymer 15 into water to obtain a slurry, and then applying the slurry onto a base film (PE base film), and then dehydrating the film to obtain a separator 15.

**Embodiment 16**

**[Preparing an organic polymer 16]**

Mixing well the required monomers at the following mass percentages: 55 wt% lauryl methacrylate, 2 wt% acrylic acid, 3 wt% hydroxyethyl acrylate, 5 wt% trimethylolpropane triacrylate, 5 wt% styrene, 20 wt% acrylonitrile, and 10% acrylamide. Adding 1000 grams of mixed monomers, 30 grams of sodium dodecyl sulfate as an emulsifier, 10 grams of ammonium persulfate as an initiator, and 1200 grams of deionized water into a 5000 mL four-necked flask equipped with a mechanical stirring unit, a thermometer, and a condenser pipe, and emulsifying the mixture by stirring at a high speed for 30 minutes. Raising the temperature to 75 °C under the protection of nitrogen, keeping reaction for 4 hours, and then adjusting the pH to a value of 6 to 8, reducing the temperature to below 40 °C, and outputting the product to obtain an organic polymer 16.

**[Preparing a polymer 16]**

Taking 1 kg of organic polymer 16, adding 250 grams of aluminum oxide and 1 kg of deionized water, stirring for 1 hour, spray-drying the mixture to obtain polymer powder, and then grinding and pulverizing the polymer powder to obtain a polymer 16.

**[Preparing a separator 16]**

Dispersing the polymer 16 into water to obtain a slurry, and then applying the slurry onto a base film (PE base film), and then dehydrating the film to obtain a separator 16.

**Embodiment 17**

**[Preparing an organic polymer 17]**

Mixing well the required monomers at the following mass percentages: 30 wt% methyl methacrylate, 40 wt%

lauryl methacrylate, 3 wt% acrylic acid, 2 wt% hydroxyethyl acrylate, 5 wt% trimethylolpropane triacrylate, 10 wt% styrene, 5 wt% acrylonitrile, and 5% acrylamide. Adding 1000 grams of mixed monomers, 30 grams of sodium dodecyl sulfate as an emulsifier, 10 grams of ammonium persulfate as an initiator, and 1200 grams of deionized water into a 5000 mL four-necked flask equipped with a mechanical stirring unit, a thermometer, and a condenser pipe, and emulsifying the mixture by stirring at a high speed for 30 minutes. Raising the temperature to 75 °C under the protection of nitrogen, keeping reaction for 4 hours, and then adjusting the pH to a value of 6 to 8, reducing the temperature to below 40 °C, and outputting the product to obtain an organic polymer 17.

**[Preparing a polymer 17]**

Taking 1 kg of organic polymer 17, adding 53 grams of nano-silicon dioxide and 1 kg of deionized water, stirring for 1 hour, spray-drying the mixture to obtain polymer powder, and then grinding and pulverizing the polymer powder to obtain a polymer 17.

**[Preparing a separator 17]**

Dispersing the polymer 17 into water to obtain a slurry, and then applying the slurry onto a base film (PE base film), and then dehydrating the film to obtain a separator 17.

**Embodiment 18**

**[Preparing an organic polymer 18]**

Mixing well the required monomers at the following mass percentages: 20 wt% methyl methacrylate, 50 wt% n-butyl acrylate, 2 wt% acrylic acid, 3 wt% hydroxyethyl acrylate, 5 wt% trimethylolpropane triacrylate, 15 wt% styrene, and 5 wt% acrylonitrile. Adding 1000 grams of mixed monomers, 30 grams of sodium dodecyl sulfate as an emulsifier, 10 grams of ammonium persulfate as an initiator, and 1200 grams of deionized water into a 5000 mL four-necked flask equipped with a mechanical stirring unit, a thermometer, and a condenser pipe, and emulsifying the mixture by stirring at a high speed for 30 minutes. Raising the temperature to 75 °C under the protection of nitrogen, keeping reaction for 4 hours, and then adjusting the pH to a value of 6 to 8, reducing the temperature to below 40 °C, and outputting the product to obtain an organic polymer 18.

**[Preparing a polymer 18]**

Taking 1 kg of organic polymer 18, adding 53 grams of nano-silicon dioxide and 1 kg of deionized water, stirring for 1 hour, spray-drying the mixture to obtain polymer powder, and then grinding and pulverizing the polymer powder to obtain a polymer 18.

**[Preparing a separator 18]**

Dispersing the polymer 18 into water to obtain a slurry, and then applying the slurry onto a base film (PE base film), and then dehydrating the film to obtain a separator 18.

**Embodiment 19**

**[Preparing an organic polymer 19]**

Mixing 10 grams of sodium dodecyl sulfate, 1200 grams of deionized water, 10 grams of isopropyl benzene hydroperoxide, 15 grams of sodium formaldehyde sulfoxylate, 0.05 gram of ferrous sulfate, and 2 grams of disodium ethylenediaminetetraacetic acid (EDTA), and then adding mixed monomers at the following mass percentages: 20 wt% methyl methacrylate, 40 wt% n-butyl acrylate, 2 wt% acrylic acid, 3% hydroxyethyl acrylate, 5 wt% trimethylolpropane triacrylate, 10 wt% styrene, and 10 wt% acrylonitrile. Putting the mixture into a high-pressure reactor, purging the reactor with nitrogen 3 times, and then adding 10 wt% butadiene. Emulsifying the mixture by stirring at a high speed at 25 °C for 30 minutes, raising the temperature to 65 °C, keeping reaction at 0.2 MPa for 6 hours, adjusting the pH to a value of 6 to 8, reducing the temperature to below 40 °C, and outputting the product to obtain an organic polymer 19.

**[Preparing a polymer 19]**

Taking 1 kg of organic polymer 19, adding 53 grams of nano-silicon dioxide and 1 kg of deionized water, stirring for 1 hour, spray-drying the mixture to obtain polymer powder, and then grinding and pulverizing the polymer powder to obtain a polymer 19.

**[Preparing a separator 19]**

Dispersing the polymer 11 into water to obtain a slurry, and then applying the slurry onto a base film (PE base film), and then dehydrating the film to obtain a separator 19.

**Embodiment 20**

**[Preparing an organic polymer 20]**

Mixing well the required monomers at the following mass percentages: 26.7 wt% butyl acrylate, 2 wt% acrylic acid, 2 wt% 2-hydroxyethyl acrylate, 5 wt% trimethylolpropane triacrylate, 17.85 wt% styrene, 28.6 wt% acrylonitrile, and 17.85% acrylamide. Adding 1000 grams of mixed monomers, 30 grams of sodium dodecyl sulfate as an emulsifier, 10 grams of ammonium persulfate as an initiator, and 1200 grams of deionized water into a 5000 mL four-necked flask equipped with a mechanical stirring unit, a thermometer, and a condenser pipe, and emulsifying the mixture by stirring at a high speed for 30 minutes. Raising the temperature to 75 °C under the protection of nitrogen, keeping reaction for 4 hours, and then adjusting the pH to a value of 6 to 8, reducing the temperature to below 40 °C, and outputting the product to obtain an organic polymer 20.

**[Preparing a polymer 20]**

Taking 1 kg of organic polymer 20, adding 250 grams of aluminum oxide and 1 kg of deionized water, stirring for 1 hour, spray-drying the mixture to obtain polymer powder, and then grinding and pulverizing the polymer powder to obtain a polymer 20.

**[Preparing a separator 20]**

Dispersing the polymer 20 into water to obtain a slurry, and then applying the slurry onto a base film (PE base film), and then dehydrating the film to obtain a separator 20.

**Embodiment 21**

**[Preparing an organic polymer 21]**

Mixing well the required monomers at the following mass percentages: 38.6 wt% butyl acrylate, 2 wt% acrylic acid, 2 wt% 2-hydroxyethyl acrylate, 5 wt% trimethylolpropane triacrylate, 9.5 wt% styrene, 28.6 wt% acrylonitrile, and 14.35% acrylamide. Adding 1000 grams of mixed monomers, 30 grams of sodium dodecyl sulfate as an emulsifier, 10 grams of ammonium persulfate as an initiator, and 1200 grams of deionized water into a 5000 mL four-necked flask equipped with a mechanical stirring unit, a thermometer, and a condenser pipe, and emulsifying the mixture by stirring at a high speed for 30 minutes. Raising the temperature to 75 °C under the protection of nitrogen, keeping reaction for 4 hours, and then adjusting the pH to a value of 6 to 8, reducing the temperature to below 40 °C, and outputting the product to obtain an organic polymer 21.

**[Preparing a polymer 21]**

Taking 1 kg of organic polymer 21, adding 250 grams of aluminum oxide and 1 kg of deionized water, stirring for 1 hour, spray-drying the mixture to obtain polymer powder, and then grinding and pulverizing the polymer powder to obtain a polymer 21.

**[Preparing a separator 21]**

Dispersing the polymer 11 into water to obtain a slurry, and then applying the slurry onto a base film (PE base film), and then dehydrating the film to obtain a separator 21.

**Comparative Embodiment 1**

**[Preparing an organic polymer 22]**

Mixing well the required monomers at the following mass percentages: 77 wt% methyl methacrylate, 16 wt% butyl acrylate, 2 wt% acrylic acid, and 5 wt% trimethylolpropane triacrylate. Adding 1000 grams of mixed monomers, 30 grams of sodium dodecyl sulfate as an emulsifier, 10 grams of ammonium persulfate as an initiator, and 1200 grams of deionized water into a 5000 mL four-necked flask equipped with a mechanical stirring unit, a thermometer, and a condenser pipe, and emulsifying the mixture by stirring at a high speed for 30 minutes. Raising the temperature to 75 °C under the protection of nitrogen, keeping reaction for 4 hours, and then adjusting the pH to a value of 6 to 8, reducing the temperature to below 40 °C, and outputting the product to obtain an organic polymer 22.

**[Preparing a polymer 22]**

Taking 1 kg of organic polymer 22, adding 1 kg of nano-silicon dioxide and 2 kg of deionized water, stirring for 22 hour, spray-drying the mixture to obtain polymer powder, and then grinding and pulverizing the polymer powder to obtain a polymer 1.

**[Preparing a separator 22]**

Dispersing the polymer 22 into water to obtain a slurry, and then applying the slurry onto a base film (PE base film), and then dehydrating the film to obtain a separator 22.

**Comparative Embodiment 2**

**[Preparing an organic polymer 23]**

Mixing well the required monomers at the following mass percentages: 50 wt% methyl methacrylate, 43 wt% butyl acrylate, 2 wt% acrylic acid, and 5 wt% trimethylolpropane triacrylate. Adding 1000 grams of mixed monomers, 30 grams of sodium dodecyl sulfate as an emulsifier, 10 grams of ammonium persulfate as an initiator, and 1200 grams of deionized water into a 5000 mL four-necked flask equipped with a mechanical stirring unit, a thermometer, and a condenser pipe, and emulsifying the mixture by stirring at a high speed for 30 minutes. Raising the temperature to 75 °C under the protection of nitrogen, keeping reaction for 4 hours, and then adjusting the pH to a value of 6 to 8, reducing the temperature to below 40 °C, and outputting the product to obtain an organic polymer 23.

**[Preparing a polymer 23]**

Taking 1 kg of organic polymer 23, adding 1 kg of nano-silicon dioxide and 2 kg of deionized water, stirring for 23 hour, spray-drying the mixture to obtain polymer powder, and then grinding and pulverizing the polymer powder to obtain a polymer 1.

**[Preparing a separator 23]**

Dispersing the polymer 23 into water to obtain a slurry, and then applying the slurry onto a base film (PE base film), and then dehydrating the film to obtain a separator 23.

**Comparative Embodiment 3**

**[Preparing an organic polymer 24]**

Mixing well the required monomers at the following mass percentages: 18 wt% methyl methacrylate, 75 wt% butyl acrylate, 2 wt% acrylic acid, and 5 wt% trimethylolpropane triacrylate. Adding 1000 grams of mixed monomers, 30 grams of sodium dodecyl sulfate as an emulsifier, 10 grams of ammonium persulfate as an initiator, and 1200 grams of deionized water into a 5000 mL four-necked flask equipped with a mechanical stirring unit, a thermometer, and a condenser pipe, and emulsifying the mixture by stirring at a high speed for 30 minutes. Raising the temperature to 75 °C under the protection of nitrogen, keeping reaction for 4 hours, and then adjusting the pH to a value of 6 to 8, reducing the temperature to below 40 °C, and outputting the product to obtain an organic polymer 24.

**[Preparing a polymer 24]**

Taking 1 kg of organic polymer 23, adding 1 kg of nano-silicon dioxide and 2 kg of deionized water, stirring for 1 hour, spray-drying the mixture to obtain polymer powder, and then grinding and pulverizing the polymer powder to obtain a polymer 24.

**[Preparing a separator 24]**

Dispersing the polymer 23 into water to obtain a slurry, and then applying the slurry onto a base film (PE base film), and then dehydrating the film to obtain a separator 24.

**Comparative Embodiment 4**

**[Preparing an organic polymer 25]**

Mixing well the required monomers at the following mass percentages: 15 wt% methyl methacrylate, 78 wt% butyl acrylate, 2 wt% acrylic acid, and 5 wt% trimethylolpropane triacrylate. Adding 1000 grams of mixed monomers, 30 grams of sodium dodecyl sulfate as an emulsifier, 10 grams of ammonium persulfate as an initiator, and 1200 grams of deionized water into a 5000 mL four-necked flask equipped with a mechanical stirring unit, a thermometer, and a condenser pipe, and emulsifying the mixture by stirring at a high speed for 30 minutes. Raising the temperature to 75 °C under the protection of nitrogen, keeping reaction for 4 hours, and then adjusting the pH to a value of 6 to 8, reducing the temperature to below 40 °C, and outputting the product to obtain an organic polymer 25.

**[Preparing a polymer 25]**

Taking 1 kg of organic polymer 24, adding 1 kg of nano-silicon dioxide and 2 kg of deionized water, stirring for 1 hour, spray-drying the mixture to obtain polymer powder, and then grinding and pulverizing the polymer powder to obtain a polymer 25.

**[Preparing a separator 25]**

Dispersing the polymer 25 into water to obtain a slurry, and then applying the slurry onto a base film (PE base film), and then dehydrating the film to obtain a separator 25.

Others differences in the parameters for the preparation of the organic polymer, the polymer, and the separator in Embodiments 1 to 21 and Comparative Embodiments 1 to 4 are set out in Table 1.

**Table 1**

| Serial number | Particle diameter of inorganic compound (μm) | Span of polymer represented by $(D_{90}-D_{10})/D_{50}$ | Mass ratio between first monomer, second monomer, third monomer, and fourth monomer |
|---|---|---|---|
| Embodiment 1 | 0.1 | 1.65 | 1: 0.1: 0: 0 |
| Embodiment 2 | 0.1 | 1.69 | 1: 0.18: 0: 0 |
| Embodiment 3 | 0.1 | 1.75 | 1: 0.2: 0: 0 |
| Embodiment 4 | 0.1 | 1.78 | 1: 0.5: 0: 0 |
| Embodiment 5 | 0.1 | 1.55 | 1: 0.04: 0.01: 0 |
| Embodiment 6 | 0.1 | 1.65 | 1: 0.06: 0.06: 0 |
| Embodiment 7 | 0.1 | 1.78 | 1: 0.14: 0.29: 0 |
| Embodiment 8 | 0.1 | 1.89 | 1: 0.12: 0.6: 0 |
| Embodiment 9 | 0.1 | 1.95 | 1: 0.2: 0.8: 0 |
| Embodiment 10 | 0.1 | 1.55 | 1: 0.125: 0.075: 0.05 |
| Embodiment 11 | 0.1 | 1.65 | 1: 0.15: 0.22: 0.1 |
| Embodiment 12 | 0.1 | 1.76 | 1: 0.13: 0.28: 0.25 |

(continued)

| Serial number | Particle diameter of inorganic compound (μm) | Span of polymer represented by $(D_{90}-D_{10})/D_{50}$ | Mass ratio between first monomer, second monomer, third monomer, and fourth monomer |
|---|---|---|---|
| Embodiment 13 | 0.1 | 1.88 | 1: 0.2: 0.8: 0.5 |
| Embodiment 14 | 0.1 | 1.93 | 1: 0.2: 0.2: 0.6 |
| Embodiment 15 | 0.1 | 1.89 | 1: 0.07: 0.2: 0.07 |
| Embodiment 16 | 0.1 | 1.78 | 1: 0.08: 0.31: 0.15 |
| Embodiment 17 | 0.1 | 1.56 | 1: 0.125: 0.06: 0.06 |
| Embodiment 18 | 0.1 | 1.71 | 1: 0.19: 0.06: 0 |
| Embodiment 19 | 0.1 | 1.64 | 1: 0.19: 0.14: 0 |
| Embodiment 20 | 0.1 | 1.78 | 1: 0.5: 0.8: 0.5 |
| Embodiment 21 | 0.1 | 1.78 | 1: 0.2: 0.6: 0.3 |
| Comparative Embodiment 1 | 0.1 | 2.15 | 1: 0: 0: 0 |
| Comparative Embodiment 2 | 0.1 | 1.55 | 1: 0: 0: 0 |
| Comparative Embodiment 3 | 0.1 | 1.5 | 1: 0: 0: 0 |
| Comparative Embodiment 4 | 0.1 | 1.45 | 1: 0: 0: 0 |

The separators in Embodiments 1 to 21 and Comparative Embodiments 1 to 4 are subjected to the following tests:

1. Ionic conductivity test: Cutting a separator into 40 mm × 20 mm specimens, and stacking the cut separator specimens into groups of 4 layers each. Infiltrating the separator thoroughly by using a commercial electrolyte solution, and then assembling a test-piece symmetric cell in a glovebox by using the infiltrated separator. Measuring the resistance of the separator in an electrochemical workstation in a frequency range of 1 Hz to 100,000 Hz by applying an alternating-current signal with a polarization of 5 mV. Calculating the ionic conductivity from the measured result of the alternating-current resistance according to the following formula:

$$\delta = 1000\ L/RA$$

In the formula above, δ represents ion conductivity, measured in mS/cm; A represents the area of the test-piece separator, measured in $cm^2$; L represents the thickness of the test-piece separator, measured in cm; and R represents the resistance of the test-piece separator, measured in Ω. The test results are shown in Table 2.

2. Measuring a particle size

Testing the particle size with reference to the standard GB/T 19077-2016/ISO 13320: 2009 *Particles Size Analysis-Laser Diffraction Methods* by using a laser particle size analyzer (Malvern 3000, MasterSizer 3000) as a test instrument and using a helium-neon red light source as a main light source. Picking a clean small beaker, adding 1 gram of the specimen into the beaker, adding one drop of surfactant (TERGITOL TMN-6, by Dow Chemical Company), and adding 20 ml of deionized water (the concentration of the specimen needs to ensure that the level of obscuration is 8% to 12%). Ultrasonicating the solution at 53 KHz and 120 W for 5 minutes to complete dispersion of the specimen. Turning on the laser particle size analyzer, cleaning the optical path system, and automatically testing the background. Stirring the ultrasonicated specimen solution to disperse the specimen evenly, and putting the specimen into a specimen chamber in accordance with requirements to start measuring the particle size. The measurement results can be read from the instrument.

Calculating the particle size distribution span based on the particle size test results, and the results are shown in Table 1.

3. Testing the glass transition temperature (by a DSC method)

Measuring the glass transition temperature by differential scanning calorimetry (DSC) with reference to the standard GB/T 19466.2.

The test is performed under the following conditions:

(1) Specimen preparation: Weighing out 6±0.05 mg of specimen, and putting the specimen into an aluminum crucible. Shaking the crucible until the specimen surface is flat, covering the crucible with a lid, and putting the crucible into a measurement instrument.
(2) Parameter setting: The atmosphere is nitrogen, the flow rate of sweeping gas is 50 mL/min, and the flow rate of the protective gas is 100 mL/min.
(3) Heating conditions: The heating rate is 10 °C/ min, and the temperature range is -40 °C to 200 °C.

4. Preparing a lithium-ion battery

(1) Preparing a positive electrode plate

Dissolving a polyvinylidene fluoride binder thoroughly in N-methylpyrrolidone, and then adding a carbon black conductive agent and $LiNi_{0.7}Co_{0.2}Mn_{0.1}O_2$ as a positive active material to make a uniformly dispersed positive electrode slurry (the mass ratio between the polyvinylidene fluoride binder, the carbon black conductive agent, and the positive active material is 3: 2: 95). Applying the positive electrode slurry evenly onto an upper surface and a lower surface of the aluminum foil, and then transferring the foil into a vacuum oven to dry the foil thoroughly. Rolling the resultant electrode plate, and then die-cutting the electrode plate to obtain a positive electrode plate.

(2) Preparing a negative electrode plate

Mixing a carbon nanotube material and a binder sodium carboxymethyl cellulose at a mass ratio of 4: 1.6, and adding the mixture into water. Stirring the mixture well to form a uniform negative electrode slurry. Applying the negative electrode slurry onto an upper surface and a lower surface of copper foil, and then transferring the copper foil into a vacuum oven to dry the foil thoroughly. Die-cutting the foil to obtain a negative electrode plate.

(3) Preparing an electrolyte solution

Dissolving a lithium hexafluorophosphate $NaPF_6$ as a sodium salt in an organic solvent ethylene glycol dimethyl ether DME in an argon atmosphere glovebox (in which the content of $H_2O$ is less than 0.1 ppm, and the content of $O_2$ is less than 0.1 ppm). Stirring well to obtain an electrolyte solution in which the lithium salt concentration is 1 mol/L.

(4) Separator

The separator prepared in the above embodiments and comparative embodiments is used as a separator.

(5) Preparing a lithium-ion battery

Stacking the positive electrode plate, the separator, and the negative electrode plate sequentially, letting the separator be located between the positive electrode plate and the negative electrode plate to serve a separation function, winding the plates to obtain a bare cell, welding tabs to the bare cell, and placing the bare cell into an outer package. Injecting the above-prepared electrolyte solution into the cell that is dried, and performing steps such as packaging, static standing, chemical formation, shaping, and capacity test to complete preparing a lithium-ion battery.

Determining the cycle capacity retention rate of the lithium-ion battery according to the following method: Taking at least 2 lithium-ion batteries as parallel specimens from each embodiment and each comparative embodiment. First, leaving the specimen batteries to stand in a 25 °C constant-temperature environment for 1 hour. Subsequently, charging the batteries at a constant-current rate of 2C until the voltage reaches 3.65 V, and then charging the batteries at a constant voltage until the current is lower than 0.05C, and leaving the batteries to stand for 5 minutes. Subsequently, discharging the batteries at a constant current rate of 1C until a voltage of 2.5 V, and leaving the batteries to stand for 5 minutes, thereby completing one cycle. Repeating the above steps for a specified number of cycles (such as 1000 cycles), and calculating the capacity retention rate as: $n^{th}$-cycle capacity retention rate = $n^{th}$-cycle discharge capacity/second-cycle discharge capacity × 100%.

The test results are shown in Table 2 below.

(6) Testing the adhesiveness

Stacking the negative electrode plate and the separator of the above battery together, and placing the stacked structure onto a hot press. The parameters of the hot press are set as follows: the temperature is 55 °C, the pressure is 7 tons, and the duration is 15 s. Applying a pressure to the stacked structure to obtain a specimen of separator and negative electrode plate bonded together. Cutting the specimen into rectangular specimen strips of 150 mm × 20 mm each. Sticking an electrode plate side of the rectangular specimen strip onto a steel sheet by using double-sided tape. Separating the separator from the electrode plate by 2 cm apart in the length direction at one end of the rectangular specimen strip to obtain a specimen.

Keeping the steel sheet horizontal, and fixing the steel sheet by using a lower gripper of a universal tensile tester (CTM2100, manufactured by Xieqiang Instrument Manufacturing (Shanghai) Co., Ltd.). Fixing the peeled end of the separator by using an upper gripper of the universal tensile tester. Connecting the specimen to the tensile tester. Setting the tensile speed to 20 mm/min, and pulling the specimen horizontally for 10 cm. Recording the tension value after the tension gets stable. Calculating a bonding force between the separator and the electrode plate based on the ratio of the tension value to the specimen width. The test results are shown in Table 2 below.

**Table 2**

| Serial number | Glass transition temperature of polymer (°C) | | Bonding force (N/m) | Ionic conductivity ($mS\cdot cm^{-1}$) | Cycle capacity retention rate (%) |
|---|---|---|---|---|---|
| | First glass transition temperature (°C) | Second glass transition temperature (°C) | | | |
| Embodiment 1 | 35 | 5 | 9.5 | 0.4 | 80 |
| Embodiment 2 | 40 | 8 | 10.7 | 0.38 | 78 |
| Embodiment 3 | 40 | 12 | 11.5 | 0.38 | 78 |
| Embodiment 4 | 50 | 20 | 13.2 | 0.36 | 76 |
| Embodiment 5 | 30 | 0 | 8.5 | 0.39 | 80 |
| Embodiment 6 | 45 | 10 | 8.5 | 0.39 | 83 |
| Embodiment 7 | 55 | 20 | 8.2 | 0.44 | 88 |
| Embodiment 8 | 65 | 25 | 7.8 | 0.43 | 87 |
| Embodiment 9 | 75 | 22 | 7.5 | 0.42 | 83 |
| Embodiment 10 | 35 | -10 | 12.4 | 0.48 | 92 |
| Embodiment 11 | 40 | -5 | 12.8 | 0.48 | 92 |
| Embodiment 12 | 45 | 10 | 11.6 | 0.5 | 93 |
| Embodiment 13 | 55 | 20 | 10.3 | 0.46 | 89 |
| Embodiment 14 | 65 | 15 | 8.8 | 0.47 | 91 |
| Embodiment 15 | 50 | -10 | 9.6 | 0.45 | 90 |
| Embodiment 16 | 35 | -5 | 11.7 | 0.46 | 91 |
| Embodiment 17 | 45 | 0 | 10.2 | 0.45 | 90 |
| Embodiment 18 | 35 | 14 | 9.1 | 0.43 | 87 |
| Embodiment 19 | 35 | 20 | 8.9 | 0.45 | 88 |
| Embodiment 20 | 65 | 15 | 8.9 | 0.43 | 88 |
| Embodiment 21 | 40 | 15 | 13.1 | 0.47 | 90 |
| Comparative Embodiment 1 | 80 | - | 3.5 | 0.35 | 75 |
| Comparative Embodiment 2 | 25 | - | 10.8 | 0.33 | 71 |
| Comparative Embodiment 3 | - | -20 | 13.2 | 0.32 | 70 |

(continued)

| Serial number | Glass transition temperature of polymer (°C) | | Bonding force (N/m) | Ionic conductivity ($mS \cdot cm^{-1}$) | Cycle capacity retention rate (%) |
|---|---|---|---|---|---|
| | First glass transition temperature (°C) | Second glass transition temperature (°C) | | | |
| Comparative Embodiment 4 | - | -25 | 13.6 | 0.31 | 65 |

As can be seen from Table 2, in Embodiments 1 to 21, the polymer exhibits two glass transition temperatures, and the hot-press bonding force between the separator and the negative electrode plate as well as the capacity retention rate of the battery are higher than those of Comparative Embodiments 1 to 4. By contrast, in Comparative Embodiments 1 to 4, the polymer exhibits only one glass transition temperature, and both the ionic conductivity and the capacity retention rate of the battery are relatively low although the bonding force between the separator and the negative electrode plate in Comparative Embodiments 2 to 4 is relatively high. This indicates that when the polymer of this application is applied to the separator, the ionic conductivity of the separator is relatively high and the bonding force between the separator and the electrode plate is appropriate, thereby improving the kinetic performance of the battery.

Reference throughout this specification to "one embodiment", "some embodiments", "one or more embodiments", "an embodiment", "specific example", "some examples", and the like means that a particular feature, structure, material, or characteristic described in connection with the embodiment or example is included in at least one embodiment or example in this application. In this embodiment, the appearances of such terms are not necessarily referring to the same embodiment or example. Furthermore, the particular features, structures, materials, or characteristics may be combined in an appropriate manner in any one or more embodiments or examples. In addition, a person skilled in the art can integrate or combine different embodiments or examples as well as the features of different embodiments or examples described herein to the extent that they do not contradict each other.

Although the embodiments of this application have been shown and described above, it is understandable that the foregoing embodiments are exemplary but not intended as a limitation on this application. A person of ordinary skill in the art may make variations, modifications, substitutions, and derivations to the embodiments without departing from the scope of this application.

## Claims

1. A polymer, comprising an organic polymer and an inorganic compound, wherein polymerization monomers of the organic polymer comprise a first monomer and a second monomer; and

   a structural formula of the first monomer comprises:

   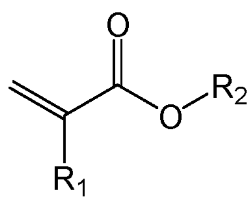

   wherein, $R_1$ comprises a hydrogen atom or a $C_1$ to $C_6$ alkyl group; $R_2$ comprises a hydrogen atom, a substituted or unsubstituted $C_1$ to $C_{21}$ alkyl group, a $C_3$ to $C_6$ cycloalkyl group, and a substituted or unsubstituted isobornyl group; and a substituent in the substituted $C_1$ to $C_{21}$ alkyl group comprises a hydroxyl group; and
   the second monomer comprises an alkenyl group.

2. The polymer according to claim 1, wherein a mass ratio of the first monomer to the second monomer is 1: (0.05 to 0.5).

3. The polymer according to claim 1 or 2, wherein a mass ratio of the first monomer to the second monomer is 1: (0.1 to 0.2).

4. The polymer according to any one of claims 1 to 3, wherein the first monomer comprises at least one of acrylic acid, methacrylic acid, butenoic acid, heptenoic acid, itaconic acid, maleic acid, methyl acrylate, ethyl acrylate, n-propyl

acrylate, n-butyl acrylate, isobutyl acrylate, sec-butyl acrylate, tert-butyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, 2-hydroxypropyl methacrylate, vinyl acetate, trifluoroethyl methacrylate, glycidyl methacrylate, glycidyl acrylate, glycidyl methacrylate, ethylene-acrylate-glycidyl methacrylate, trimethylaminoethyl methacrylate, or trimethylolpropane triacrylate, and optionally, the first monomer comprises at least one of methyl methacrylate, lauryl acrylate, lauryl methacrylate, or trimethylolpropane triacrylate.

**5.** The polymer according to any one of claims 1 to 4, wherein a structural formula of the second monomer comprises:

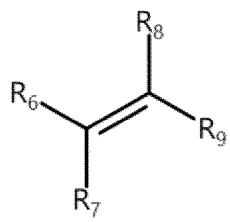

wherein, $R_6$, $R_7$, $R_8$, and $R_9$ each independently comprise a hydrogen atom, a substituted or unsubstituted phenyl group, a substituted or unsubstituted cycloalkyl group, or a linear or branched alkyl group.

**6.** The polymer according to any one of claims 1 to 5, wherein the second monomer comprises at least one of ethylene, styrene, butadiene, or isoprene.

**7.** The polymer according to any one of claims 1 to 6, wherein the polymerized monomers of the organic polymer comprise the first monomer, the second monomer, and a third monomer, and the third monomer comprises an unsaturated cyano group.

**8.** The polymer according to claim 7, wherein a structural formula of the third monomer is:

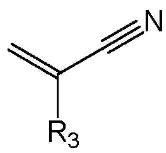

wherein, $R_3$ comprises a hydrogen atom or a $C_1$ to $C_6$ alkyl group.

**9.** The polymer according to claim 7 or 8, wherein the third monomer comprises at least one of acrylonitrile, methacrylonitrile, or ethacrylonitrile.

**10.** The polymer according to any one of claims 7 to 9, wherein a mass ratio between the first monomer, the second monomer, and the third monomer is 1: (0.05 to 0.5): (0.01 to 0.8).

**11.** The polymer according to any one of claims 7 to 10, wherein a mass ratio between the first monomer, the second monomer, and the third monomer is 1: (0.1 to 0.2): (0.05 to 0.6).

**12.** The polymer according to any one of claims 7 to 11, wherein the polymerization monomers of the organic polymer comprise the first monomer, the second monomer, the third monomer, and a fourth monomer, and the fourth monomer comprises an unsaturated amide group.

**13.** The polymer according to claim 12, wherein a structural formula of the fourth monomer comprises:

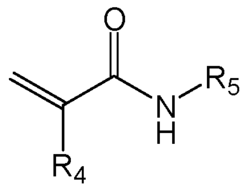

wherein, $R_4$ comprises a hydrogen atom or a $C_1$ to $C_6$ alkyl group; and $R_5$ comprises a hydrogen atom, a hydroxy-substituted $C_1$ to $C_6$ alkyl group, or a $C_1$ to $C_6$ alkoxy group.

**14.** The polymer according to claim 12 or 13, wherein the fourth monomer comprises at least one of acrylamide, N-methylol acrylamide, or N-butoxymethacrylamide.

**15.** The polymer according to any one of claims 12 to 14, wherein a mass ratio between the first monomer, the second monomer, the third monomer, and the fourth monomer is 1: (0.05 to 0.5): (0.01 to 0.8): (0.05 to 0.7).

**16.** The polymer according to any one of claims 12 to 15, wherein a mass ratio between the first monomer, the second monomer, the third monomer, and the fourth monomer is 1: (0.1 to 0.2): (0.05 to 0.6): (0.1 to 0.5).

**17.** The polymer according to any one of claims 1 to 16, satisfying at least one of the following conditions:

a particle diameter of the polymer satisfies: 3 $\mu$m $\leq D_{50} \leq$ 10 $\mu$m;
a particle size distribution span of the polymer, defined as $(D_{90}-D_{10})/D_{50}$, is less than or equal to 2.5; and
a particle diameter of the inorganic compound is 0.0001 $\mu$m to 2 $\mu$m.

**18.** The polymer according to any one of claims 1 to 17, wherein the inorganic compound is attached to a surface of the organic polymer and/or dispersed inside the organic polymer.

**19.** The polymer according to any one of claims 1 to 18, wherein the inorganic compound comprises at least one of a silicon oxide, an aluminum oxide, a calcium oxide, a zinc oxide, a magnesium oxide, sodium sulfate, sodium benzoate, calcium carbonate, or a modified material thereof.

**20.** The polymer according to any one of claims 1 to 19, wherein the inorganic compound comprises silicon dioxide, and a particle diameter of the silicon dioxide is 2 nm to 1 $\mu$m.

**21.** The polymer according to any one of claims 1 to 20, wherein, based on a mass of the polymer, a mass percent of the organic polymer is 50% to 99.9%.

**22.** The polymer according to any one of claims 1 to 21, wherein an outer surface of the polymer is uneven.

**23.** The polymer according to any one of claims 1 to 22, wherein the polymer exhibits at least a first glass transition temperature and a second glass transition temperature within a range of -10 °C to 95 °C, and the first glass transition temperature is greater than the second glass transition temperature.

**24.** The polymer according to claim 23, wherein the first glass transition temperature of the polymer is 30 °C to 75 °C; and/or
the second glass transition temperature of the polymer is -10 °C to 25 °C.

**25.** A method for preparing a polymer, comprising: mixing an organic polymer and an inorganic compound, wherein polymerization monomers of the organic polymer comprise a first monomer and a second monomer, and a structural formula of the first monomer comprises:

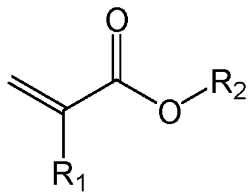

wherein, $R_1$ comprises a hydrogen atom or a $C_1$ to $C_6$ alkyl group; $R_2$ comprises a hydrogen atom, a substituted or unsubstituted $C_1$ to $C_{21}$ alkyl group, a $C_3$ to $C_6$ cycloalkyl group, and a substituted or unsubstituted isobornyl group; and a substituent in the substituted $C_1$ to $C_{21}$ alkyl group comprises a hydroxyl group; and
the second monomer comprises an alkenyl group.

**26.** A separator, comprising the polymer according to any one of claims 1 to 24 or a polymer prepared by the method according to claim 25.

**27.** The separator according to claim 26, wherein an ionic conductivity of the separator is 0.3 $mS \cdot cm^{-1}$ to 0.6 $mS \cdot cm^{-1}$.

**28.** An electrode plate, comprising the polymer according to any one of claims 1 to 24 or a polymer prepared by the method according to claim 25.

**29.** A battery, comprising the separator according to claim 26 or 27 and/or the electrode plate according to claim 28.

**30.** An electrical device, comprising the battery according to claim 29.

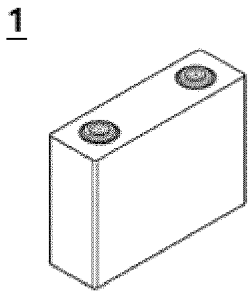


FIG. 1

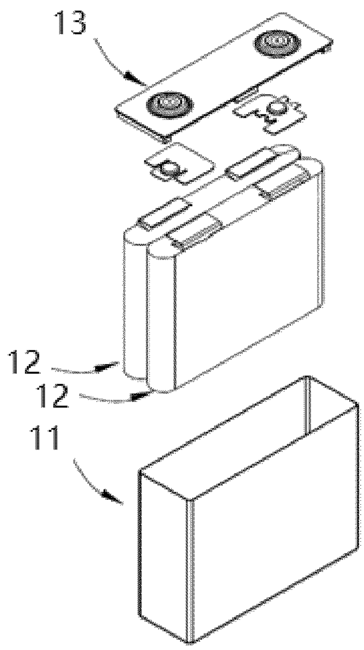


FIG. 2

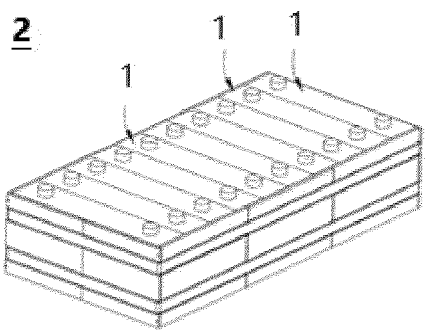


FIG. 3

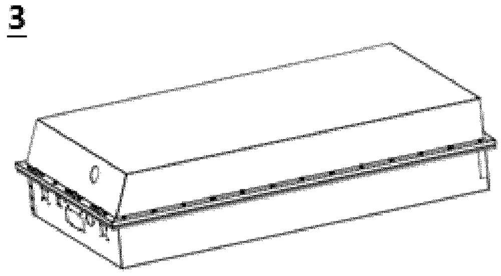


FIG. 4

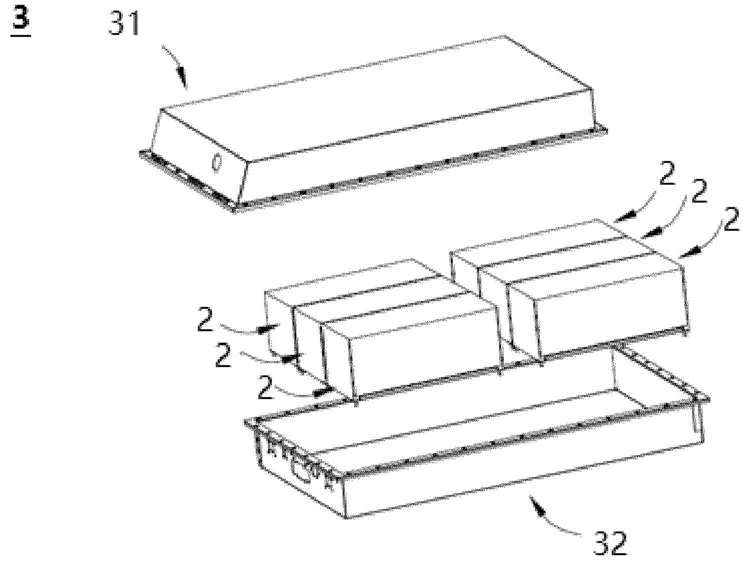


FIG. 5

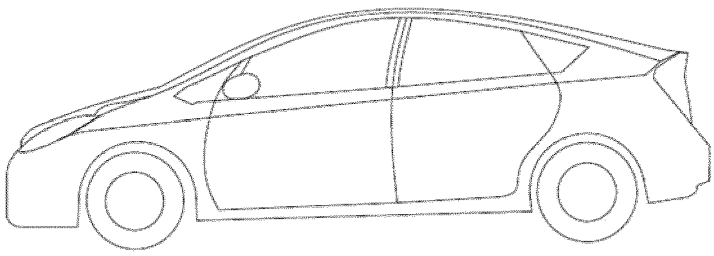

FIG. 6

**INTERNATIONAL SEARCH REPORT**

International application No.
**PCT/CN2024/070306**

**A. CLASSIFICATION OF SUBJECT MATTER**

C08L33/08(2006.01)i; C09J133/08(2006.01)i; C09J11/04(2006.01)i; C08F220/18(2006.01)i; H01M50/409(2021.01)i; H01M4/62(2006.01)i

According to International Patent Classification (IPC) or to both national classification and IPC

**B. FIELDS SEARCHED**

Minimum documentation searched (classification system followed by classification symbols)

IPC:C08L,C09J,C08F,H01M

Documentation searched other than minimum documentation to the extent that such documents are included in the fields searched

Electronic data base consulted during the international search (name of data base and, where practicable, search terms used)

CNTXT, ENTXTC, WPABS, WPABSC, VEN, DWPI, CJFD, CNKI, 万方, WANFANG, STN: 宁德, 康海杨, 郑义, 孙成栋, 李雷, 洪海艺, 丙烯酸, AA, 甲基丙烯酸, MAA, 丁烯酸, 庚烯酸, 衣康酸, 马来酸, 丙烯酸甲酯, MA, 丙烯酸乙酯, EA, 丙烯酸正丙酯, 丙烯酸正丁酯, BA, 丙烯酸异丁酯, 丙烯酸仲丁酯, 丙烯酸叔丁酯, 丙烯酸环己酯, 丙烯酸月桂酯, 丙烯酸-2-乙基己酯, 丙烯酸异辛酯, 丙烯酸-2-羟基乙酯, HEA, 丙烯酸-2-羟基丙酯, 甲基丙烯酸甲酯, MMA, 甲基丙烯酸乙酯, 甲基丙烯酸正丁酯, MBA, 甲基丙烯酸-2-乙基己酯, 甲基丙烯酸异冰片酯, 甲基丙烯酸月桂酯, 甲基丙烯酸-2-羟基乙酯, HEMA, 甲基丙烯酸-2-羟基丙酯, 乙酸乙烯酯, 甲基丙烯酸三氟乙酯, 甲基丙烯酸缩水甘油酯, 丙烯酸缩水甘油酯, 甲基丙烯酸缩水甘油酯, 乙烯-丙烯酸酯-甲基丙烯酸缩水甘油酯, 甲基丙烯酸三甲胺乙酯, 三羟甲基丙烷三丙烯酸酯, 乙烯, 苯乙烯, 丁二烯, 异戊二烯, 不饱和腈, 丙烯腈, 丙烯酰胺, 无机颗粒, 无机物, 填料, 氧化硅, SiO2, 氧化铝, Al2O3, 氧化钙, CaO, 氧化镁, MgO, 氧化锌, ZnO, 硫酸钠, 苯甲酸钠, 碳酸钙, CaCO3, 玻璃化温度, 玻璃化转变温度, Tg, 隔膜, 隔离膜, 电池, 粘, 黏, 电导率; +Acrylic, butenoic, heptanoic, itaconic, maleic, methyl +acrylate, ethyl +acrylate, ??propyl +acrylate, ??butyl +acrylate, cyclohexyl +acrylate, lauryl +acrylate, ??ethylhexyl +acrylate, ??hydroxyethyl +acrylate, ??hydroxypropyl +acrylate, isobornyl +acrylate, vinyl acetate, glycidyl +acrylate, trimethylamine +acrylate, trimethylolpropane triacrylate, styrene, butadiene, ethylene, +acrylonitrile, +acrylamide, Silicon oxide, alumina, calcium oxide, magnesium oxide, zinc oxide, sodium sulfate, sodium benzoate, calcium carbonate, Glass transition temperature, diaphragm, isolation membrane, battery, adhesive, binder, bond, conduct+

**C. DOCUMENTS CONSIDERED TO BE RELEVANT**

| Category* | Citation of document, with indication, where appropriate, of the relevant passages | Relevant to claim No. |
|---|---|---|
| PX | CN 116804139 A (NINGDE CONTEMPORARY AMPEREX TECHNOLOGY CO., LTD.) 26 September 2023 (2023-09-26)<br>description, paragraphs 12, 14-16, 22-32, and 49, and embodiments 11 and 17 | 1-30 |
| X | JP 2022025186 A (MATSUMOTO YUSHI SEIYAKU K. K.) 10 February 2022 (2022-02-10)<br>description, paragraphs 35, 43-44, and 77, tables 1-5, and embodiment 9 | 1-30 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **09 April 2024** | **11 April 2024** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**

International application No.
**PCT/CN2024/070306**

**C. DOCUMENTS CONSIDERED TO BE RELEVANT**

| Category* | Citation of document, with indication, where appropriate, of the relevant passages | Relevant to claim No. |
|---|---|---|
| X | CN 112563663 A (SHANGHAI ENERGY NEW MATERIALS TECHNOLOGY CO., LTD.) 26 March 2021 (2021-03-26)<br>embodiments 1, and 3-4 | 1-6, 19, 25-26, 29 |
| X | CN 112341961 A (SUNWODA ELECTRIC VEHICLE BATTERY CO., LTD.) 09 February 2021 (2021-02-09)<br>embodiment 1 | 1-2, 4-10, 19, 25, 26 |
| X | CN 114094274 A (MEDIUM MATERIAL LITHIUM MEMBRANE LIMITED COMPANY) 25 February 2022 (2022-02-25)<br>embodiment 3 | 1-11, 19-20, 25, 26 |
| X | CN 104335401 A (ZEON CORP.) 04 February 2015 (2015-02-04)<br>embodiment 16 | 1, 4-9, 19, 23-25, 28-29 |
| X | CN 102640329 A (ZEON CORP.) 15 August 2012 (2012-08-15)<br>embodiment 4,6 | 1, 4-9, 17, 19, 25, 26, 28-29 |
| X | CN 106519872 A (SHENZHEN SENIOR TECHNOLOGY MATERIAL CO., LTD.) 22 March 2017 (2017-03-22)<br>embodiments 2, 4, and 6 | 1, 4-6, 19, 25-26 |
| X | CN 115466359 A (SHENZHEN XINYUANBANG TECHNOLOGY CO., LTD.) 13 December 2022 (2022-12-13)<br>reference example 9 | 1-6, 25-26, 28-29 |
| X | KR 20220011097 A (LG ENERGY SOLUTION, LTD.) 27 January 2022 (2022-01-27)<br>embodiment 3 | 1-6, 25-26, 28-29 |
| X | CN 103441230 A (DONGGUAN AMPEREX TECHNOLOGY LIMITED et al.) 11 December 2013 (2013-12-11)<br>embodiment 5 | 1-2, 4-6, 25 |
| X | DE 2261754 A1 (BASF AG.) 27 June 1974 (1974-06-27)<br>embodiment 1 | 1, 4-9, 12-14, 19-20, 25 |
| X | CN 104798231 A (LG CHEMICAL LTD.) 22 July 2015 (2015-07-22)<br>embodiment 1, and description, paragraphs 20-25 and 34 | 1-30 |
| A | CN 108987751 A (NINGDE CONTEMPORARY AMPEREX TECHNOLOGY CO., LTD.) 11 December 2018 (2018-12-11)<br>entire document | 1-30 |
| A | KR 20130090437 A (LG CHEMICAL LTD.) 14 August 2013 (2013-08-14)<br>entire document | 1-30 |
| A | US 2014038048 A1 (SAMSUNG SDI CO., LTD.) 06 February 2014 (2014-02-06)<br>entire document | 1-30 |
| A | WO 2022120654 A1 (NINGDE AMPEREX TECHNOLOGY LTD.) 16 June 2022 (2022-06-16)<br>entire document | 1-30 |
| A | CN 109796554 A (FOSHAN CITY SHUNDE DISTR BATF INDUSTRY CO., LTD.) 24 May 2019 (2019-05-24)<br>entire document | 1-30 |

Form PCT/ISA/210 (second sheet) (July 2022)

**INTERNATIONAL SEARCH REPORT**
**Information on patent family members**

International application No.
**PCT/CN2024/070306**

| Patent document cited in search report | | | Publication date (day/month/year) | Patent family member(s) | | | Publication date (day/month/year) |
|---|---|---|---|---|---|---|---|
| CN | 116804139 | A | 26 September 2023 | WO | 2023178690 | A1 | 28 September 2023 |
| | | | | EP | 4317348 | A1 | 07 February 2024 |
| | | | | KR | 2024021275 | A | 16 February 2024 |
| | | | | CN | 117280009 | A | 22 December 2023 |
| JP | 2022025186 | A | 10 February 2022 | None | | | |
| CN | 112563663 | A | 26 March 2021 | CN | 112563663 | B | 11 November 2022 |
| CN | 112341961 | A | 09 February 2021 | CN | 112341961 | B | 13 January 2023 |
| CN | 114094274 | A | 25 February 2022 | CN | 114094274 | B | 01 March 2024 |
| CN | 104335401 | A | 04 February 2015 | US | 2015132644 | A1 | 14 May 2015 |
| | | | | US | 9711785 | B2 | 18 July 2017 |
| | | | | EP | 2860802 | A1 | 15 April 2015 |
| | | | | EP | 2860802 | B1 | 14 December 2016 |
| | | | | KR | 20150027059 | A | 11 March 2015 |
| | | | | KR | 102127876 | B1 | 29 June 2020 |
| | | | | JP | 6201989 | B2 | 27 September 2017 |
| | | | | WO | 2013183717 | A1 | 12 December 2013 |
| | | | | CN | 104335401 | B | 27 July 2016 |
| CN | 102640329 | A | 15 August 2012 | WO | 2011040474 | A1 | 07 April 2011 |
| | | | | KR | 20120091029 | A | 17 August 2012 |
| | | | | KR | 101615792 | B1 | 26 April 2016 |
| | | | | US | 2012189898 | A1 | 26 July 2012 |
| | | | | US | 8852788 | B2 | 07 October 2014 |
| | | | | EP | 2485302 | A1 | 08 August 2012 |
| | | | | EP | 2485302 | A4 | 07 August 2013 |
| | | | | EP | 2485302 | B1 | 08 March 2017 |
| | | | | JP | 5765228 | B2 | 19 August 2015 |
| | | | | CN | 102640329 | B | 25 November 2015 |
| CN | 106519872 | A | 22 March 2017 | None | | | |
| CN | 115466359 | A | 13 December 2022 | None | | | |
| KR | 20220011097 | A | 27 January 2022 | US | 2024039119 | A1 | 01 February 2024 |
| | | | | KR | 102534840 | B1 | 26 May 2023 |
| | | | | WO | 2022019572 | A1 | 27 January 2022 |
| | | | | EP | 4152509 | A1 | 22 March 2023 |
| | | | | CN | 115803959 | A | 14 March 2023 |
| CN | 103441230 | A | 11 December 2013 | US | 2015056491 | A1 | 26 February 2015 |
| | | | | CN | 103441230 | B | 09 March 2016 |
| DE | 2261754 | A1 | 27 June 1974 | JPS | 4989768 | A | 27 August 1974 |
| CN | 104798231 | A | 22 July 2015 | EP | 2889938 | A1 | 01 July 2015 |
| | | | | EP | 2889938 | B1 | 10 January 2018 |
| | | | | US | 2015263350 | A1 | 17 September 2015 |
| | | | | US | 9887423 | B2 | 06 February 2018 |
| | | | | KR | 20140070341 | A | 10 June 2014 |
| | | | | KR | 101637889 | B1 | 08 July 2016 |
| | | | | WO | 2014084527 | A1 | 05 June 2014 |
| CN | 108987751 | A | 11 December 2018 | None | | | |
| KR | 20130090437 | A | 14 August 2013 | None | | | |
| US | 2014038048 | A1 | 06 February 2014 | US | 9318743 | B2 | 19 April 2016 |
| | | | | EP | 2693532 | A1 | 05 February 2014 |

Form PCT/ISA/210 (patent family annex) (July 2022)

**INTERNATIONAL SEARCH REPORT**
**Information on patent family members**

International application No.
**PCT/CN2024/070306**

| Patent document cited in search report | Publication date (day/month/year) | Patent family member(s) | Publication date (day/month/year) |
|---|---|---|---|
| | | EP 2693532 B1 | 12 November 2014 |
| | | KR 20140018124 A | 12 February 2014 |
| | | KR 101746894 B1 | 14 June 2017 |
| | | US 2014038049 A1 | 06 February 2014 |
| WO 2022120654 A1 | 16 June 2022 | EP 4207467 A1 | 05 July 2023 |
| | | US 2023344077 A1 | 26 October 2023 |
| | | CN 113728504 A | 30 November 2021 |
| CN 109796554 A | 24 May 2019 | CN 109796554 B | 06 April 2021 |

Form PCT/ISA/210 (patent family annex) (July 2022)